# EUROPEAN PATENT SPECIFICATION

(11) **EP 2 816 548 B1**
(45) Date of publication and mention of the grant of the patent: **16.05.2018**
(21) Application number: 14171991.4
(22) Date of filing: 11.06.2014
(51) Int. Cl.: G09G 5/00, G09G 5/14

(54) **Display device, display system and program thereof**
Anzeigevorrichtung, Anzeigesystem und Programm dafür
Dispositif d'affichage, système d'affichage et programme associé

(30) Priority: 21.06.2013 JP 2013130638
(43) Date of publication of application: 24.12.2014
(73) Proprietor: Ricoh Company, Ltd., Tokyo 143-8555 (JP)
(72) Inventor: Nakamura, Rie, Tokyo, 143-8555 (JP); Sakai, Daisuke, Tokyo, 143-8555 (JP); Torii, Osamu, Tokyo, 143-8555 (JP); Ozaki, Hiroki, Tokyo, 143-8555 (JP); Fujikawa, Kazuya, Tokyo, 143-8555 (JP)
(74) Representative: Round, Edward Mark

(56) References cited:
- US-A1- 2004 130 502

## Description

### BACKGROUND OF THE INVENTION

### 1. Field of the Invention

The disclosures herein generally relate to a display device, a display system and a program thereof.

### 2. Description of the Related Art

Various kinds of network projectors connected to plural wireless terminals via wireless networks have been put to practical use. For example, Japanese Patent No. 4966577 discloses a method of displaying an image by data from a wireless terminal which first receives a connection request to a network projector.

However, in the method disclosed in Japanese Patent No. 4966577, the wireless terminal that first receives the connection request to the network projector is fixed as a terminal of a transmission source of image data to be displayed. Accordingly, even when other terminal requests a connection (called "content display request", in the following) to the network projector during the displaying of image a permission for an interruption by the other terminal cannot be determined.

Moreover, in a projection function by an input via a network in compliance with UPnP (Universal Plug and Play), which recently has been widely known, the permission for the interruption of the content display request cannot be determined. In such a function of projection there is a problem of inconvenience.

US 2004/0130502A discloses an image displaying device connected with plural terminals through a network capable of two-way communications such that while a specific terminal is transmitting image data, other terminals do not transmit image data. The device switches between a split display mode, in which one screen is divided into plural sections, and a sequential display mode, in which images based on the image data output by plural terminals are sequentially displayed on one screen so that the computers, are sequentially switched by the remote controller. In the case of moving pictures, the output of image data is continued until the transmitting terminal is switched.

### SUMMARY OF THE INVENTION

It is a general object of at least one embodiment of the present invention to provide a display device, a display system and a program thereof that substantially obviates one or more problems caused by the limitations and disadvantages of the related art. The invention is defined in the independent claims. In one embodiment, a display device includes a display unit that reproduces motion image data, and provides mode information indicating a mode of reproduction of the motion image data; a storage unit that stores a criterion for aborting a reproduction of motion image data reproduced by the display unit according to a mode of reproduction of motion image data; and a determination unit that, in response to a request for aborting a reproduction of motion image data reproduced by the display unit, determines whether to abort the reproduction of the motion image data based on a criterion for aborting a reproduction of motion image data stored in the storage unit according to the mode of reproduction indicated by the mode information.

In another embodiment, a display system includes a display device and a content server that is connected to the display device via a network. The display device includes a display unit that reproduces motion image data transmitted from the content server via the network, and provides mode information indicating a mode of reproduction of the motion image data; a storage unit that stores a criterion for aborting a reproduction of motion image data reproduced by the display unit according to a mode of reproduction of motion image data; and a determination unit that, in response to a request for aborting a reproduction of motion image data reproduced by the display unit, determines whether to abort the reproduction of the motion image data based on a criterion for aborting a reproduction of motion image data stored in the storage unit according to the mode of reproduction indicated by the mode information.

In yet another embodiment a non-transitory computer-readable storage medium stores a program for causing a computer to perform a process of reproducing motion image data. The process includes a display step of reproducing motion image data, and providing mode information indicating a mode of reproduction of the motion image data; a storage step of storing a criterion for aborting a reproduction of motion image data reproduced in the display step according to a mode of reproduction of motion image data; and a determination step of, in response to a request for aborting a reproduction of the motion image data reproduced in the display step, determining whether to abort the reproduction of the motion image data based on a criterion for aborting a reproduction of the motion image data stored in the storage step according to the mode of reproduction indicated by the mode information.

According to the embodiment of the present invention, a highly convenient display device by which a permission to interrupt a content display request from an other terminal during the displaying of images can be determined is provided.

### BRIEF DESCRIPTION OF THE DRAWINGS

Other objects and further features of embodiments will be apparent from the following detailed description when read in conjunction with the accompanying drawings, in which:
Fig. 1 is a diagram illustrating an example of a schematic configuration of a display system according to a first embodiment;
Figs. 2A and 2B are sequence diagrams illustrating an example of a projection process according to the first embodiment;
Fig. 3 is a diagram illustrating an example of a screen for specifying an interruption in a PC screen projection function according to the first embodiment;
Fig. 4 is a diagram illustrating an example of a functional diagram of a projector according to the first embodiment;
Fig. 5 is a diagram illustrating an example of a hardware configuration of the projector according to the first embodiment;
Fig. 6 is a diagram illustrating an example of an interruption determination table according to the first embodiment;
Fig. 7 is a sequence diagram illustrating an example of an interruption determination process depending on a reproduction state of content according to the first embodiment;
Figs. 8A to 8D are diagrams illustrating an example of a projection request management table in an interruption prohibition process according to the first embodiment;
Figs. 9A to 9D are diagrams illustrating an example of a projection requst management table in an interruption permission process according to the first embodiment;
Fig. 10 is a diagram illustrating an example of an interruption determination table according to a second embodiment;
Fig. 11 is a sequence diagram illustrating an example of an interruption determination process depending on a reproduction mode of content according to the second embodiment;
Fig. 12 is a diagram illustrating an example of an interruption determination table according to a third embodiment;
Fig. 13 is a sequence diagram illustrating an example of an interruption determination process depending on an elapsed time of reproduction of content according to the third embodiment;
Fig. 14 is a diagram illustrating an example of an interruption determination table according to a fourth embodiment;
Fig. 15 is a sequence diagram illustrating an example of an interruption determination process depending on a remaining time of reproduction of content according to the fourth embodiment;
Fig. 16 is a diagram illustrating an example of an interruption determination table according to a fifth embodiment; and
Fig. 17 is a sequence diagram illustrating an example of an interruption determination process depending on a reproduction time and a degree of progress of reproduction of content according to the fifth embodiment.

### DESCRIPTION OF THE PREFERRED EMBODIMENTS

In the following, embodiments of the present invention will be described with reference to the accompanying drawings.

### (First embodiment)

### <Display system: schematic configuration>

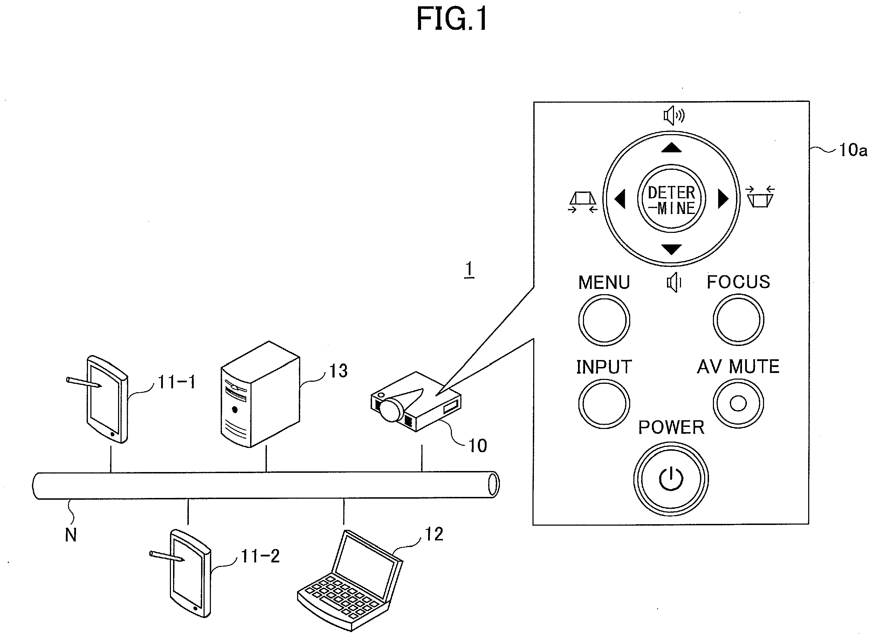

Fig. 1 is a diagram illustrating a schematic configuration of a display system according to a first embodiment. The display system 1, shown in Fig. 1, includes a projector 10 as an example of a display device, a tablet-type PC (personal computer) 11, a laptop PC 12 and a content server 13. The projector 10, the tablet-type PC 11, the laptop PC 12 and the content server 13 are connected via a network N and can communicate with each other. Meanwhile, respective numbers of devices shown in Fig. 1 are not limited to those shown in Fig. 1.

The projector 10 is provided with a projection function by an input via a network in compliance with UPnP (Universal Plug and Play) or a projection function by plural inputs via a network such as a dedicated utility for projecting and displaying an image (display screen) of a PC on a projection screen. A main body of the projector 10 has an operation unit 10a for operating "menu", "focus", "input", "selection, determination", "ON/OFF of power", or the like.

The display device according to the present embodiment is not limited to the projector 10, but includes overall devices that can display contents such as an image, a picture, characters or the like on display screens such as, for example, a display, a touch panel or the like. Accordingly, the term "projection" in the present embodiment is not limited to a meaning of merely projecting content on a predetermined projection screen, but includes a concept of displaying as necessary.

In the tablet-type PC 11, a DMC (Digital Media Controller) software or the like is installed so as to realize the projection function using UPnP, as described above. When content desired to be projected is selected from the content server 13, the tablet-type PC 11 instructs the projector 10 to project the selected content.

In the laptop PC 12, a dedicated utility software or the like is installed so as to make the projector project an image in the PC. The PC instructs the projector 10 to project the content via the dedicated utility software.

The content server 13 is provided with a function of a DMS (Digital Media Server) in the projection function using, for example, UPnP. The content server 13 stores content to be projected by the projector 10, and provides stored content.

Meanwhile, the display system 1 may include plural content servers 13. In this case, the tablet-type PC 11-1 or 11-2 may not specify the same content server 13, but may select content from the content server 13 storing content desired by the tablet-type PC.

In the case where during projecting the first content the projector 10 receives a projection request (display instruction) of the second content from the tablet-type PC 11 or the laptop PC 12, the projector 10 determines whether to project the second content (permit an interruption) or not based on information on an execution state of the first content or the like.

Accordingly, the projector 10 realizes an appropriate interruption control for a content display request from the other terminal during displaying an image, and convenience for a user using the projector 10 can be improved. The present invention will be specifically explained in the following.

### <Projection process sequence>

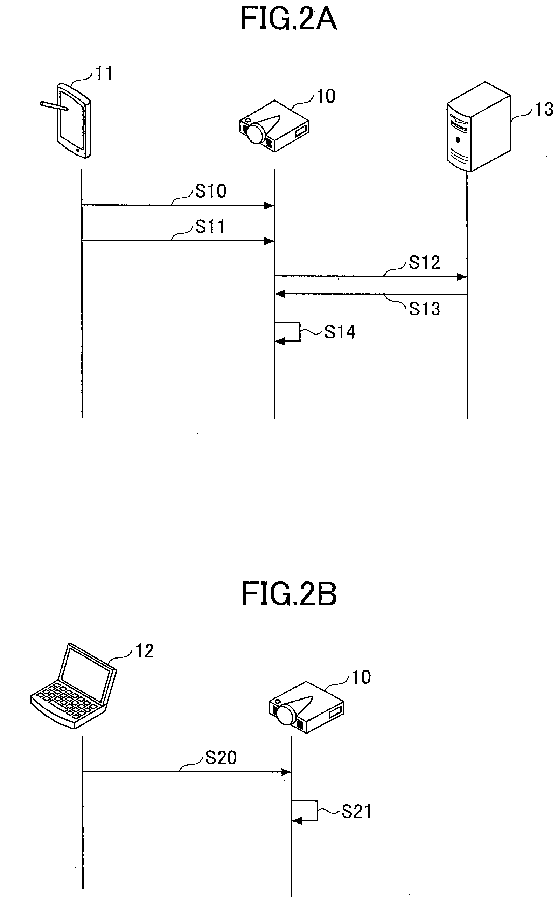

Figs. 2A and 2B are sequence diagrams illustrating an example of a projection process. Fig. 2A shows a flow of the projection process using UPnP. Fig. 2B shows a flow of the projection process for the PC image using the dedicated utility software.

Fig. 2A shows an example, in which the tablet-type PC 11 executes, for example, a DMC software or the like, selects a desired content from the content server 13, specifies a location of the selected content (S10) and requests to start the projection of the content (S11). The projector 10, based on the location of the content specified the tablet-type PC 11, sends a content acquisition request to the content server 13 (S12). When the content is acquired from the content server 13 (S13), a projection of the content starts (S14).

As stated above, in the projection process using UPnP, the projector 10 projects the content acquired from the content server 13. Meanwhile, in the UPnP protocol, the content location specification (Set AV Transport URI (Request)) is a different message from the projection start (Play (Request)).

Fig. 2B shows an example, in which the laptop PC 12 selects content in the laptop PC 12 via the dedicated utility software, as stated above, sends the selected content to the projector 10, and requests to start the projection of the content (S20). The projector 10 start projecting the content sent from the laptop PC 12 (S21).

Meanwhile, in the projection process using the dedicated utility software as described above, when the start of the projection is requested (S20), a permission or a prohibition for interruption of projecting content during the projection of the other content can be instructed.

As stated above, the projector 10 can receive plural requests to start projection of content via a network. On the other hand, in the case where the projector 10 has a single projection screen, a projection request from a single request source is executed, and other projection requests are required to be excluded.

The projector 10 according to the present embodiment can determine depending on the situation whether the projection request for the present projection is not prioritized (i.e. an interruption is prohibited) or the latest projection request is prioritized (i.e. an interruption is permitted) for the plural request to start projection of content, as described in the following.

### <Example of method of specifying interruption>

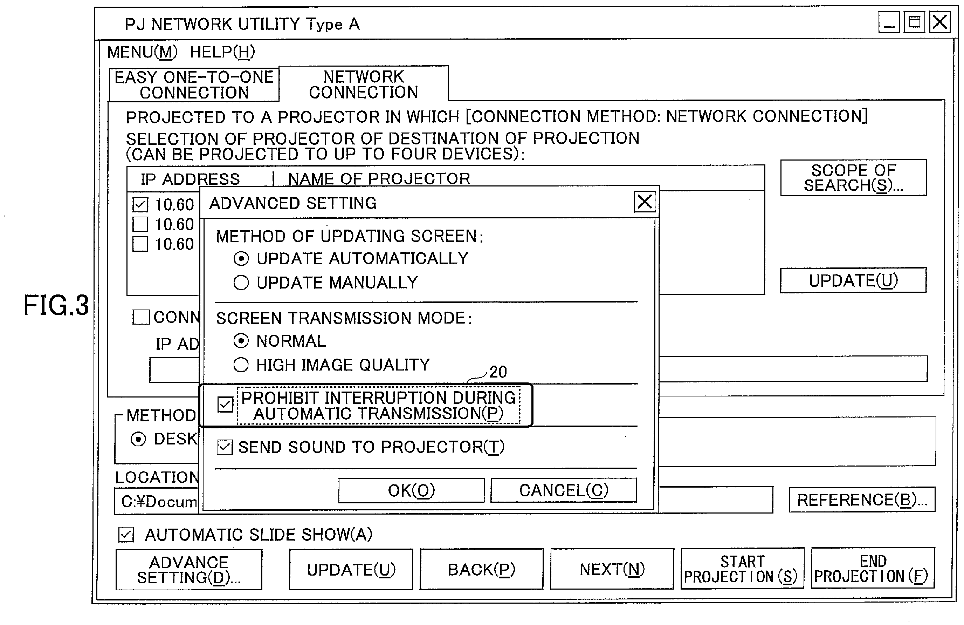

Fig. 3 is a diagram illustrating an example of a screen for specifying an interruption using a dedicated utility software. For example, when the start of the projection is requested, the laptop PC 12 shown in Fig. 1 can receive a specification for the permission/prohibition for interruption from a user in advance by using the dedicated utility software.

That is, as shown in a box enclosed by thick lines 20 in Fig. 3, the laptop PC 12 displays an item to be checked at "prohibit interruption during the automatic transmission" in an interface for an advanced setting related to a network connection. By ticking this item, the user can enable the prohibition of interruption during the projection of the content. Moreover, by removing the tick from this item, the user can disable the permission of interruption during the projection of the content.

On the other hand, the UPnP projection function executed by the tablet-type PC 11 is not provided with an interface for setting the permission or prohibition for interruption of the other content, as shown in Fig. 3. Accordingly, it has been impossible to determine whether the interruption of the content during the projection of the other content, for example, from the tablet-type PC 11 to the projector 10 is permitted or prohibited.

However, the projector 10 (display device) according to the present embodiment can determine the permission or prohibition for interruption of content from the tablet-type PC 11, by an interruption determination table 36, which will be described later, in which an interruption determination is set corresponding to an execution state of content for each kind of the content. The configuration will be explained sequentially in the following.

### <Functional configuration of projector>

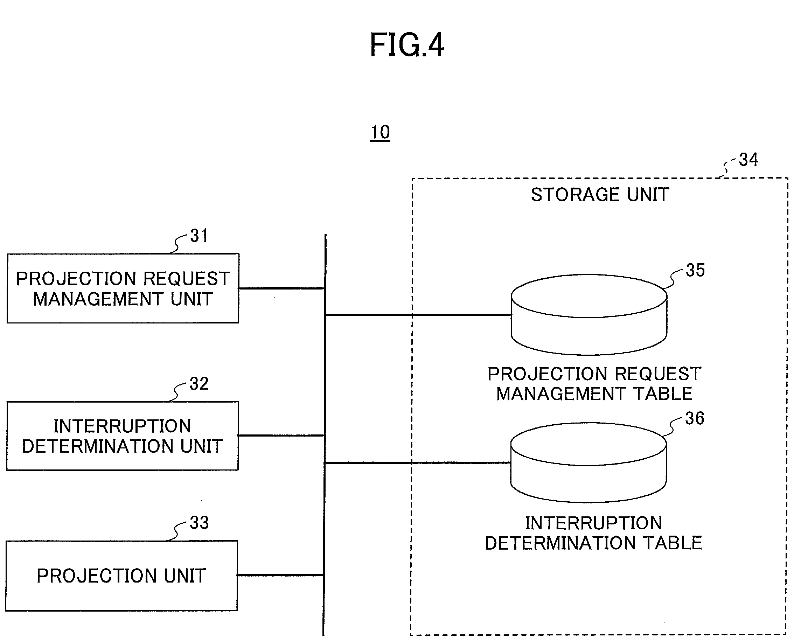

Fig. 4 is a diagram illustrating an example of a functional configuration of the projector according to the present embodiment. As shown in Fig. 4, the projector 10 includes a projection request management unit 31 as an example of an information acquisition unit, an interruption determination unit 32 as an example of a determination unit, a projection unit 33 as an example of a display unit and a storage unit 34. The storage unit 34 includes a projection request management table 35 and an interruption determination table 36.

The projection request management unit 31 manages requests to start projection of content, and makes a display screen of the display unit 33 execute a projection of the specified content. The projection request management unit 31, as information related to the content received via the network N, acquires a kind of content indicating for example whether the content is a moving image or a still image. The projection request management unit 31, in response to a determination result by the interruption determination unit 32, executes the request to start projection of content from the tablet PC 11 or the laptop PC 12.

In the case where during a projection of a first content the interruption determination unit 32 receives a projection start request (display instruction) for the second content, the interruption determination unit 32 acquires information on an execution state of the first content from the projection unit 33. Furthermore, the interruption determination unit 32 determines whether to execute the interruption of the second content or not based on the interruption determination table 36 stored in the storage unit 34.

The interruption determination unit 32, in the case where, for example, the kind of the first content is a "moving image", and the information on the execution state of the content indicates "being reproduced", prohibits an interruption of the projection of the second content. When the reproduction of the first content is temporarily stopped, the interruption of the projection of the second content is permitted.

For example, when the reproduction of the first content is temporarily stopped, unless the user performs an exit operation, an image at the stoppage continues to be projected. Then, even if the interruption is permitted, it will not become an unintended exclusion state, and the second content needs not wait for an indefinite time to be projected. On the other hand, in the case where the kind of the first content is a moving image and the execution state is "being reproduced", even when the user does not perform the exit operation, the execution of the first content finishes by reproducing to the end. Even if the interruption is not permitted, the second content needs not wait for an indefinite time to be projected.

Therefore, the interruption determination unit 32 determines whether to execute the interruption or not by referring an "interruption determination result" in response to the execution state of content for each kind of the first content stored in the interruption determination table 36 of the storage unit 34.

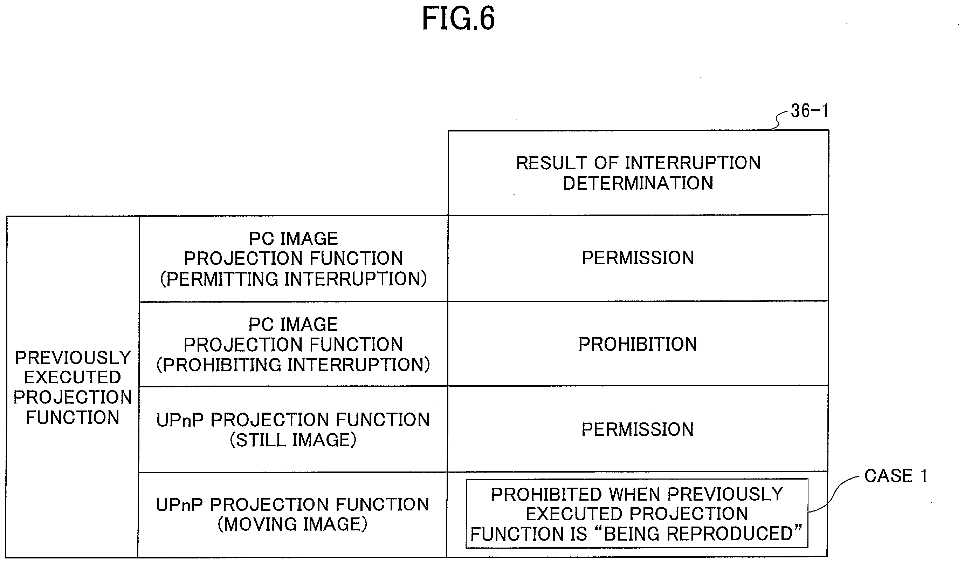

In the interruption determination table 36 stored in the storage unit 34, which will be described later in detail, for example, as shown in Fig. 6, the interruption determination is distinguished by a "previously executed projection function" which is a "PC image projection function" or a "UPnP projection function". In the "PC image projection function", the specification in Fig. 3, i.e. "permission of interruption" or "prohibition of interruption" is reflected. In the "UPnP projection function", the information on the content acquired by the projection request management unit 31, i.e. "still image" or "moving image" is reflected. The interruption determination table indicates data for the "interruption determination result" corresponding to the four cases as described above, respectively.

The present embodiment has a feature in particular that in the "UPnP projection function" the "interruption determination result" is set corresponding to the execution state of content for each kind of the content.

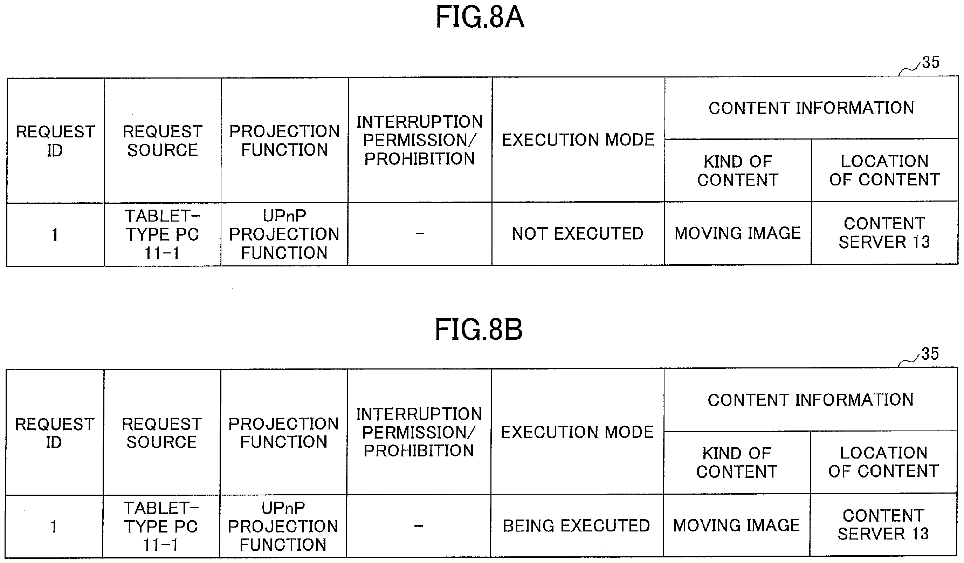

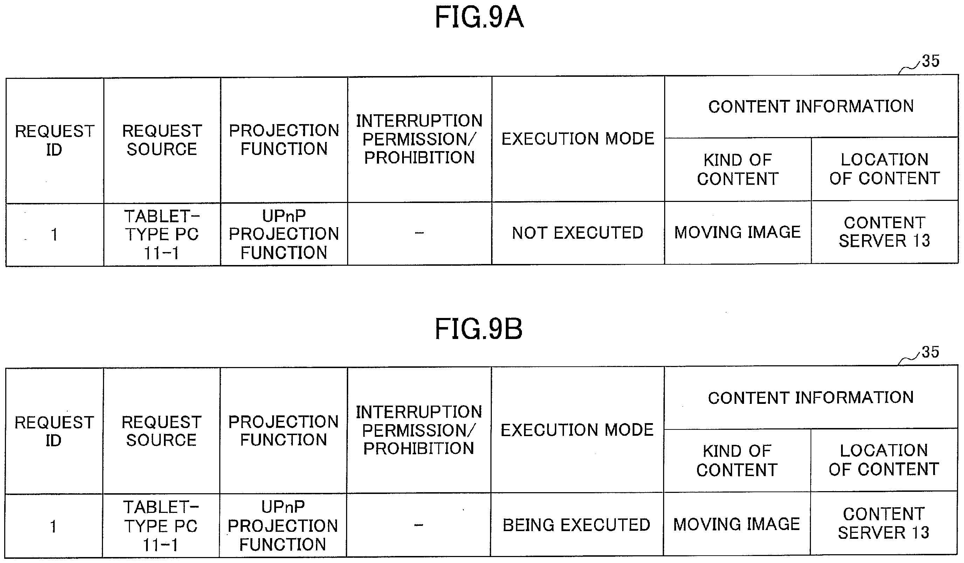

The projection request management table 35 stored in the storage unit 34, which will be described later in detail, for example, includes a lot of items, as shown in Figs. 8A-8D and 9A-9D. For example, the projection request management table includes items of "request ID", "request source", "projection function", "execution state", "content information" and the like. The "content information" includes a kind of content (moving image or still image), and a location of content. Moreover, when the kind of the content is a moving image, in particular, also a time of reproduction, the moving image has, is stored. The projection request management table 35 is updated as needed based on the process by the projection request management unit 31.

The projection unit 33, in response to the projection request by the projection request management unit 31, projects the content. Moreover, the projection unit 33 stores information related to the execution state of the content, and sends notification of the information related to the execution state in response to the acquisition request from the interruption determination unit 32.

The information related to the execution state of the content includes, in the present embodiment, a "reproduction state", a "reproduction mode" and an "elapsed time of reproduction" of the content. The "reproduction state" is information whether the content is reproduced or temporarily stopped. The "reproduction mode" is information whether the content is reproduced normally (one-time) or repeatedly. The "elapsed time of reproduction" is a reproduced time of the content. Accordingly, the projection unit 33 has the reproduction state, the reproduction mode, information related to a reproduction time and the elapsed time of reproduction, which the first content under projection includes. The projection unit 33 sends notification the interruption determination unit 32 as necessary.

Incidentally, the interruption determination unit 32, when the kind of content is "moving image", acquires from the projection unit 33 the "reproduction time" and the "elapsed time of reproduction" of the information related to the execution state of the content, calculates a "remaining time of reproduction" and a "degree of progress of reproduction", and reflects them in the interruption determination.

### <Hardware configuration of projector>

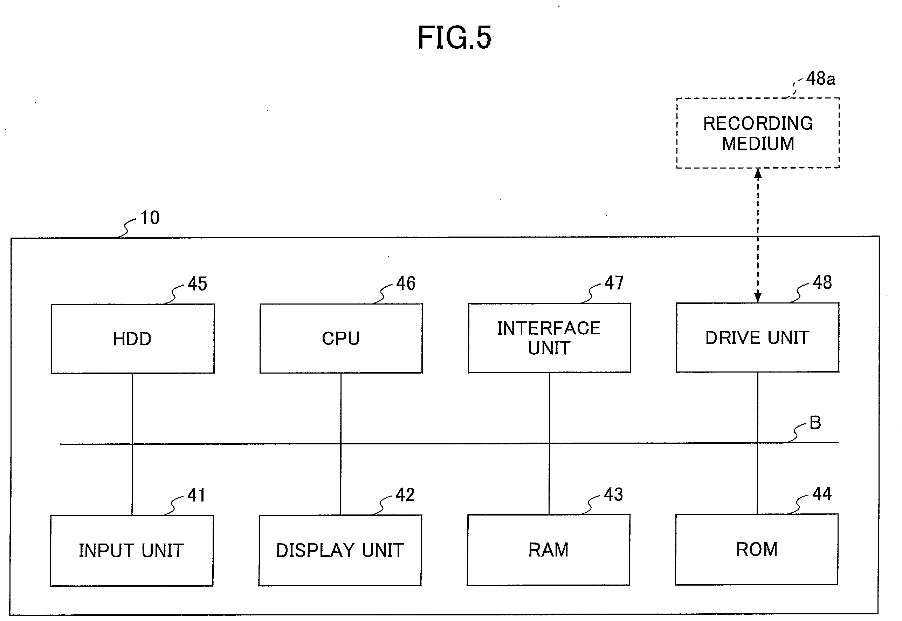

Fig. 5 is a diagram illustrating an example of a hardware configuration of the projector according to the present embodiment. As shown in Fig. 5, the projector 10 includes an input unit 41, a display unit 42, a RAM (Random Access Memory) 43, a ROM (Read-Only Memory) 44, a HDD (Hard Disk Drive) 45, a CPU (Central Processing Unit) 46, an Interface unit 47 and a drive unit 48. The above units are connected to each other via a bus B.

The input unit 41 includes, for example, a main body keypad or the like and used for inputting respective operation signals to the projector 10.

The display unit 42 includes, for example, a display, a lamp or the like and displays a processing result in the projector 10.

The RAM 43 is a volatile semiconductor memory (storage unit), and temporarily stores a program or data.

The ROM 44 is a non-volatile semiconductor memory (storage unit) that can maintain internal data even when the power is off. The ROM 44 stores a BIOS (Basic Input/Output System) executed when the projector 10 starts, or a program or data for setting a system, a network and the like.

The HDD 45 is a non-volatile storage unit that stores a program or data. The program or data, stored in the HDD 45, include a system software controlling the projector 10 (for example, an OS (Operating System) as a basic software such as "Windows (registered trademark)", "UNIX (registered trademark)" or the like), an application software that provides various functions on the system software and the like. Moreover, the HDD 45 manages the stored program and data by a predetermined file system and/or a DB (Data Base).

The CPU 46 realizes a control of the entirety of the apparatus or an equipped function by reading out a program or data from the above storage unit (for example, the "HDD", the "ROM" or the like) onto the RAM 43 and executing processes.

The interface unit 47 is an interface which connects the projector 10 to a transmission path of a wired or wireless network or the like. The projector 10 can perform data communication with an other external device via the interface unit 47.

The drive unit 48 is an interface to a detachable recording medium 48a. The projector 10 reads from/writes to the recording medium 48a via the drive unit 48. The recording medium 48a includes, for example, a SD (Secure Digital) Memory Card, a USB (Universal Serial Bus) memory, or the like.

Meanwhile, the projector 10 may be configured by connecting a projector that projects image data onto the projection screen or the like to the bus B as a hardware configuration other than the above-described hardware configuration. According to the hardware configuration, the projector 10 can provide various processes.

### <Interruption determination table>

Fig. 6 is a diagram illustrating an example of an interruption determination table 36. In the case where during a projection of a content the interruption determination unit 32 receives a projection start request for other content, the interruption determination unit 32 determines whether to execute the interruption for the other content or not refer to the interruption determination table 36-1 shown in Fig. 6, for example.

In the interruption determination table 36-1, as shown in Fig. 6, for example, an interruption determination is distinguished by a "previously executed projection function" in the projector 10 which is a "PC image projection function" or a "UPnP projection function".

For example, the "PC image projection function" can preliminarily set the permission or prohibition for the interruption via the interface shown in Fig. 3 when the projection start is requested. Therefore, the interruption determination table 36-1 is configured so that, in the case where a permission for interruption is preliminarily set for the previously executed content by the PC image projection function, the "interruption determination result" for content executed by the PC image projection function or the UPnP projection function is afterward set to "permission".

Moreover, the interruption determination table is configured so that, in the case where a prohibition for interruption is preliminarily set for the previously executed content by the PC image projection function, the "interruption determination result" for content executed by the PC image projection function or the UPnP projection function afterward becomes "prohibition".

On the other hand, for the previously executed content by the UPnP projection function, as described above, the permission or prohibition for the interruption via an interface of the tablet-type PC 11 or the like cannot be set preliminarily when the projection start is requested. Therefore, in the interruption determination table 36-1, the interruption determination is distinguished by a kind of content (still image, moving image or the like) out of the content information obtained from the tablet-type PC 11 when the projection start for a content previously executed by the UPnP projection function is requested. Then, the permission or prohibition interruption of content executed afterwards is set for each of them.

Meanwhile, the kind of content is included in meta data of the content obtained by, for example, the above-described content location specification (Set AV Transport URI (Request)) or the like by the tablet-type PC 11.

The interruption determination table 36-1 is configured so that, in the case where the previously executed content by the UPnP projection function is a "still image", the interruption of a content executed by the PC image projection function or the UPnP projection function is "permitted" afterwards.

Moreover, in the case where the previously executed content by the UPnP projection function is a "moving image", the interruption of a content executed by the PC image projection function or the UPnP projection function can be set according to an execution state of a content of the previously executed projection function. The interruption determination table, shown in Fig. 6, is configured so that the interruption is "prohibited when the previously executed projection function is being reproduced".

By referring the above-described interruption determination table, when a projection start request for content is received during a projection of an other content, it can be determined whether to start the projection of the content or not.

In the following, an example of an interruption determination process will be explained, as Case 1, in which in the case where the previously executed content by the UPnP projection function is a "moving image" in the interruption determination table 36-1, a projection start request for other content by the PC image projection function or the UPnP projection function is received afterward. In Case 1, the interruption determination process is performed according to a state of reproduction of the previously projected content.

### <Process sequence for prohibiting interruption depending on reproduction state of content>

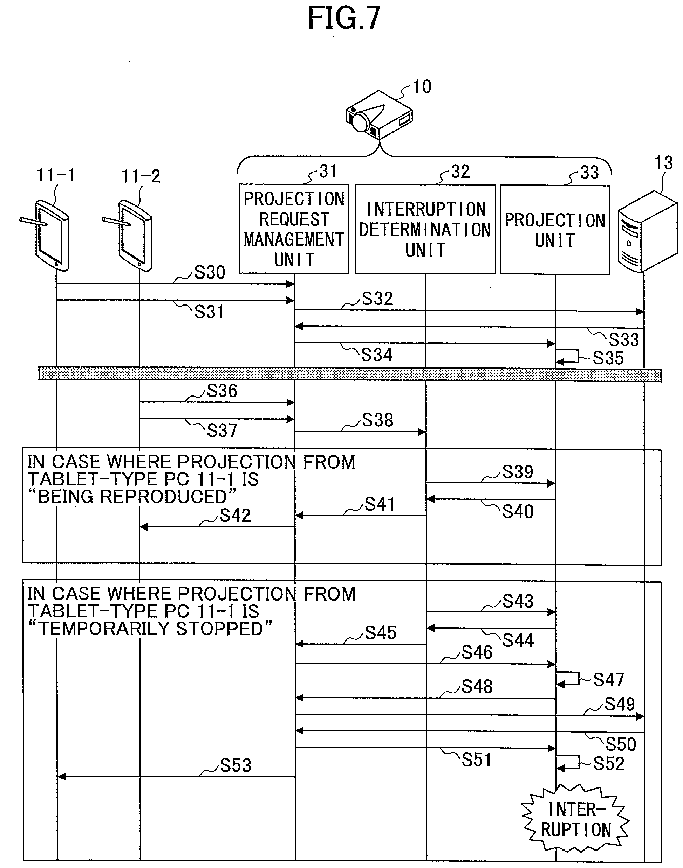

Fig. 7 is a sequence diagram illustrating an example of an interruption determination process based on the reproduction state of content. Figs. 8A to 8D are diagrams illustrating an example of a projection request management table 35 in the interruption prohibition process. Figs. 9A to 9D are diagrams illustrating an example of a projection request management table 35 in the interruption permission process.

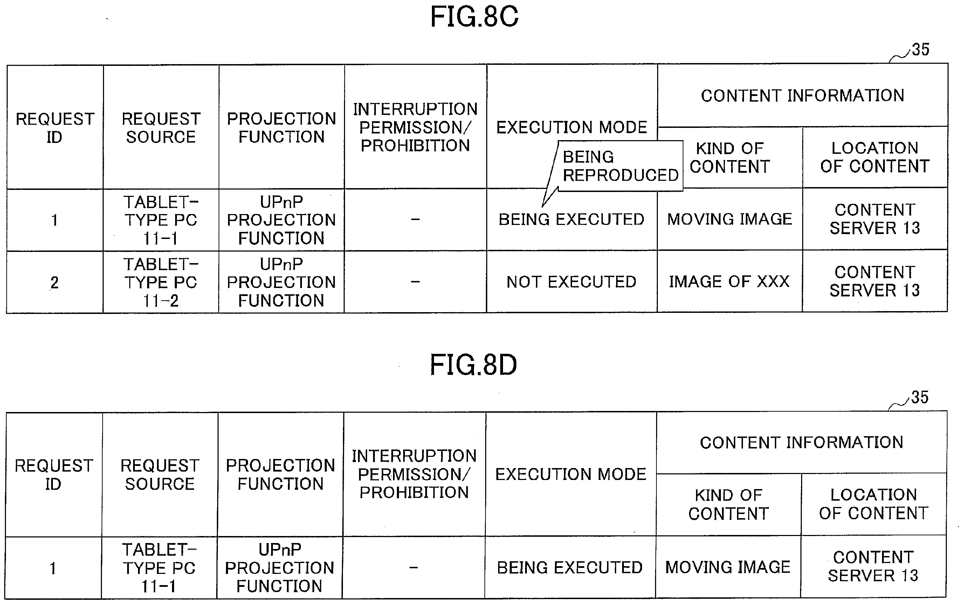

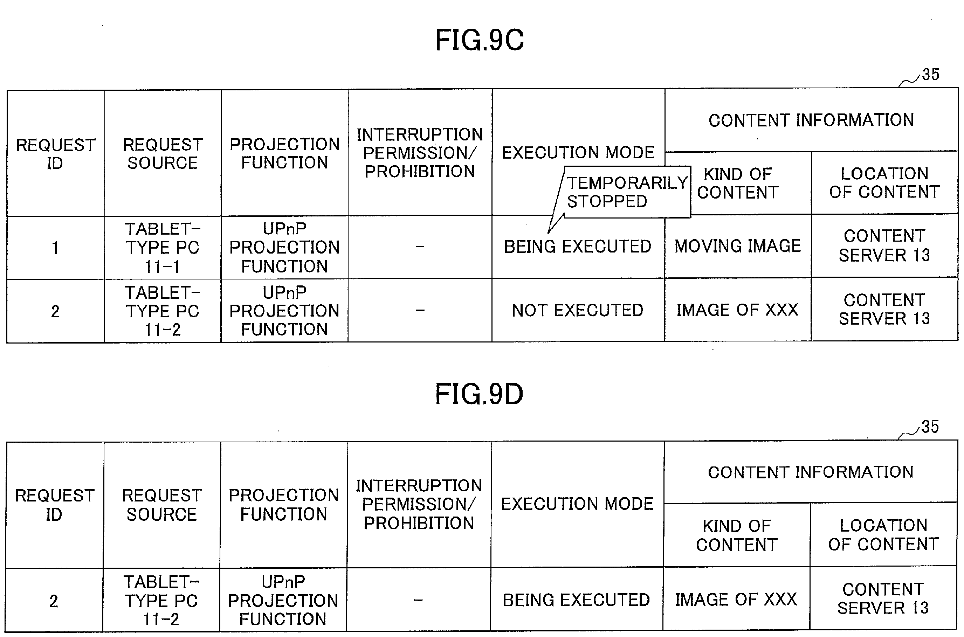

The example shown in Fig. 8 illustrates prohibiting an interruption of other content when a projection start request for the other content is received during a reproduction of a "moving image" by the "UPnP projection function". The example shown in Fig. 9 illustrates permitting the interruption of the other content when the projection start request for the other content is received during a temporal stop of the "moving image" by the "UPnP projection function". In the following, the process sequence of the interruption prohibition will be explained first.

As shown in Fig. 7, when the projection request management unit 31 of the projector 10, for example, acquires an instruction specification for a content location from the tablet-type PC 11-1 (S30), the acquired content information is registered in the projection request management table 35 as shown in Fig. 8A, for example. The projection request is registered in the projection request management table 35, for example, as "request ID is 1", "request source is tablet-type PC 11-1", "projection function is UPnP projection function", "execution state is 'unexecuted'", "content information: kind of content is moving image, content location is content server 13" or the like. Moreover, a reproduction time of the content (not shown) may be registered as the content information.

Next, when the projection request management unit 31 acquires a projection start request from the tablet-type PC 11-1 (S31), since the projection request management table 35 does not include an execution projection request at this stage, the item "execution state" on the line of "request ID is 1" in the projection request management table 35 is changed to "executing". Moreover, the projection request management unit 31, based on the content location acquired from the tablet-type PC, requests the content server 13 an acquisition of content (S32).

When the projection request management unit 31 acquires the content requested from the content server 13 (S33), the projection request management unit 31 requires a projection unit 33 to start projection (S34). The projection unit 33 starts the projection in response to the request from the projection request management unit 31 (S35).

When the projection request management unit 31 acquires an instruction specification for the content location from the tablet-type PC 11-2 (S36), the acquired content information is registered in the projection request management table 35 as shown in Fig. 8C, for example. The projection request is registered in the projection request management table 35, for example, as "request ID is 2", "request source is tablet-type PC 11-2", "projection function is UPnP projection function", "execution state is 'unexecuted'", "content information: kind of content is image of X, content location is content server 13" or the like.

Next, when the projection request management unit 31 acquires a projection start request from the tablet-type PC 11-2 (S37), the projection request management unit 31 determines whether there is an execution projection request at this stage with reference to the projection request management table 35. When the projection request management unit 31 determines that there is a projection request indicating the item "execution state is 'executing'" on the line of "request ID is 1" in the projection request management table 35 as shown in Fig. 8C, the projection request management unit 31 sends notification the interruption determination unit 32 of the content information of the projection request executing at this stage, and asks to perform an interruption determination (S38). On this occasion, the projection request management unit 31 sends notification of, for example, the information of "request ID is 1" (UPnP projection function, moving image) as the content information of the projection request executing at this state.

The interruption determination unit 32 acquires from the projection unit 33 information related to the reproduction state, which is a part of the information related to the execution state of content of the previously executed projection function (S39).

The interruption determination unit 32 acquires from the projection unit 33 the information "being reproduced" which is related to the reproduction state of the content (S40).

The interruption determination unit 32, in the above process of S40, with reference to the interruption determination table 36-1 of the storage unit 34, based on the information that the projection start request from the tablet-type PC 11-2 is "prohibited when the previously executed projection function is being reproduced", determines that the "interruption is prohibited". Then, the interruption determination unit 32 sends notification the projection request management unit 31 of the determination result "interruption is prohibited" (S41).

The projection request management unit 31, based on the determination result "interruption is prohibited", deletes the projection request including "request ID is 2" from the projection request management table 35, as shown in Fig. 8D. Moreover, the projection request management unit 31 sends notification the tablet-type PC 11-2 that the process ends due to a "projection error" (S42).

### <Process sequence for permitting interruption depending on reproduction state of content>

Fig. 7 illustrates an example of a process sequence for permitting the interruption depending on the reproduction state of content (from S43 to S53). Figs. 9A to 9D are diagrams illustrating an example of the projection request management table 35 in the interruption permission process. This sequence shows, for example, permitting an interruption of other content in Case 1, in which a projection start request of the other content is received afterwards during the projection of a "moving image" by the "UPnP projection function".

An explanation for the processes from S30 to S38 in Fig. 7, which has been described above, will be omitted. The diagrams shown in Figs. 9A and 9B are the same as those in Figs. 8A and 8B, respectively. Meanwhile, in the process at S37, the projection request management unit 31 acquires a projection start request from the tablet-type PC 11-2.

The projection request management unit 31, since there is a currently executing projection request, sends notification the interruption determination unit 32 of content information (a UPnP projection function, a moving image) of the currently executing projection request, and requests an interruption determination (S38). Then, the projection request management unit 31 sends notification of, for example, information with "request ID is 1" (a UPnP projection function and a moving image) as the content information of the currently executed projection request.

The interruption determination unit 32 requires the projection unit 33 to provide one of the information on the execution state of the content of the previously executed projection function, i.e. information on the reproduction state (S43).

The interruption determination unit 32 acquires "being temporarily stopped" which is the information on the reproduction state of the content from the projection unit 33 (S44).

The interruption determination unit 32, in the above-described process at S44, with reference to the interruption determination table 36-1 in the storage unit 34, based on the information that the projection start request from the tablet-type PC 11-2 is "prohibited when the previously executed projection function is being reproduced", determines that the "interruption is permitted". Then, the interruption determination unit 32 sends notification the projection request management unit 31 of the determination result "interruption is permitted" (S45).

The projection request management unit 31, based on the determination result "interruption is permitted" by the interruption determination unit 32, requires the projection unit 33 to end the projection in order to abort the currently executing projection (S46). The projection unit 33, when the projection ends (S47), sends notification the projection request management unit 31 that the projection ends (S48).

The projection request management unit 31, as shown in Fig. 9C or Fig. 9D for example, changes the item "execution state" of the projection request "request ID is 2" registered in the projection request management table 35 from unexecuted to executing. The projection request management unit 31, based on the instruction specification of the content location acquired from the tablet-type PC 11-2, requires the content server 13 to acquire the content (S49).

The projection request management unit 31, when acquiring the required content from the content server 13 (S50), requires the projection unit 33 to start the projection (S51). The projection unit 33, in response to the request from the projection request management unit 31, starts projection of the projection request with "request ID is 2" (S52).

The projection request management unit 31, when the interruption of the projection request with "request ID is 2" from the tablet-type PC 11-2 is successful, as shown in Fig. 9D, deletes the projection request of the projection request with "request ID is 1" in the projection request management table 35. Moreover, the tablet-type PC 11-1 is notified that the projection ends (S53).

As described above, in the case that the execution state of the content is "temporarily stopped", by permitting an interruption, the interruption at an appropriate time becomes possible, without waiting for a time period when the previous projection function is not reproduced.

### (Second embodiment)

### <Other example of interruption determination table>

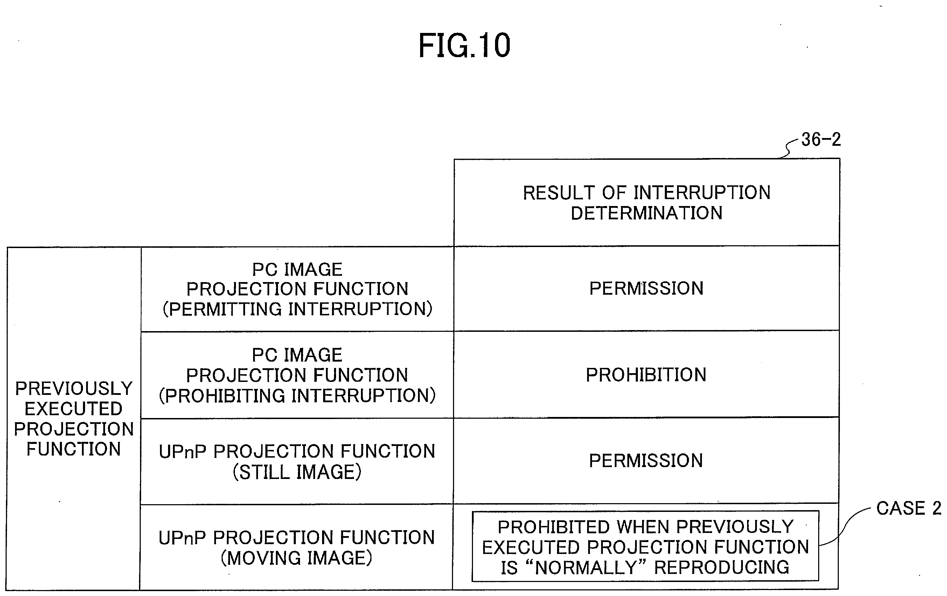

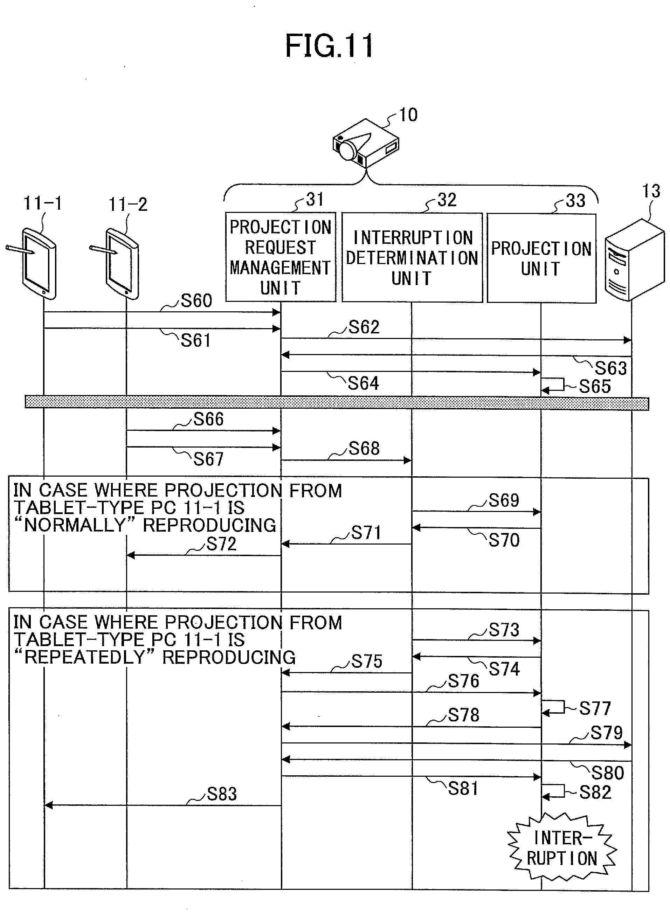

Fig. 10 is a diagram illustrating an other example of the interruption determination table 36. Compared with the above-described interruption determination table 36-1 shown in Fig. 6, an interruption determination table 36-2 shown in Fig. 11 is configured so that in the case where the "previously executed projection function" is a "UPnP projection function" and a "moving image", content executed afterwards by the PC image projection function or the UPnP projection function is "prohibited when the previously executed projection function is normally reproduced".

That is, the present embodiment is different from the first embodiment in that the interruption determination is processed according to a "reproduction mode" of the content for the execution state of the previously executed first content. The "reproduction mode" for the execution state of the content in the present invention has a determination criterion that the reproduction is a "normal reproduction" (one-time reproduction) or a "repeated reproduction". The normal reproduction represents a reproduction without any additional configuration.

In the following, an example of an interruption determination process will be explained, as Case 2, in which in the case where the previously executed content by the UPnP projection function is a "moving image" in the interruption determination table 36-2, a projection start request for other content by the PC image projection function or the UPnP projection function is received afterward. In Case 2, the interruption determination process is performed according to the mode of reproduction of the previously projected content.

### <Process sequence for prohibiting interruption depending on reproduction mode of content>

Fig. 11 is a sequence diagram illustrating an example of an interruption determination process based on the reproduction mode of content. Fig. 11 is a diagram explaining Case 2 shown in Fig. 10. At first, the interruption prohibition process sequence will be explained especially with reference to S69 to S72 in Fig. 11.

The processes from S60 to S68 in Fig. 11 is the same as the processes from S30 to S38 in Fig. 7, as described above, and a specific explanation will be omitted here. Meanwhile, in a process at S67, the projection request management unit 31 acquires a projection start request from the tablet-type PC 11-2.

The projection request management unit 31, since there is a currently executing projection request, sends notification the interruption determination unit 32 of content information (a UPnP projection function and a moving image) of the currently executing projection request, and request an interruption determination (S68). Then, the projection request management unit 31 sends notification of, for example, information with "request ID is 1" (a UPnP projection function and a moving image) as the content information of the currently executing projection request.

The interruption determination unit 32 requires the projection unit 33 to provide one of the information on the execution state of the content of the previously executed projection function, i.e. information on the reproduction mode (S69).

The interruption determination unit 32 acquires "normal reproduction" which is the information on the reproduction mode of the content from the projection unit 33 (S70). Then, the interruption determination unit 32, in the above-described process of S70, with reference to the interruption determination table 36-2 in the storage unit 34, based on the information that the projection start request from the tablet-type PC 11-2 is "prohibited when the previously executed projection function is normally reproduced", determines that the "interruption is prohibited". Then, the interruption determination unit 32 sends notification the projection request management unit 31 of the determination result "interruption is prohibited" (S71).

The projection request management unit 31, based on the determination result "interruption is prohibited", sends notification the tablet-type PC 11-2 that the projection start request ends due to a "projection error" (S72).

Although it is not shown in the figures, along with each process in the interruption determination process sequence in Fig. 11, a registration or a deletion of "request ID", a change of "execution state" or the like, as shown in Fig. 8, in the projection request management table 35 is performed as needed in the same way as that described in the first embodiment. In the following, the description regarding the projection request management table 35 will be omitted.

### <Interruption permission process sequence according to reproduction mode of content>

Fig. 11 illustrates, from S73 to S83, an example of the interruption permission process sequence based on the reproduction mode of the content. This sequence shows, for example, permitting an interruption of other content in Case 2, in which a projection start request of the other content is received afterwards during the projection of a "moving image" by the "UPnP projection function" (See Fig. 10).

An explanation for the processes from S60 to S68 in Fig. 11, which has been described above, will be omitted.

Meanwhile, in the process at S67, the projection request management unit 31 acquires a projection start request from the tablet-type PC 11-2.

The projection request management unit 31, since there is a currently executing projection request, ends notification the interruption determination unit 32 of content information (a UPnP projection function and a moving image) of the currently executing projection request, and requests an interruption determination (S68). Then, the projection request management unit 31 sends notification of, for example, information with "request ID is 1" (a UPnP projection function and a moving image) as the content information of the currently executing projection request.

The interruption determination unit 32 requires the projection unit 33 to provide one of the information on the execution state of the content of the previously executed projection function, i.e. information on the reproduction mode (S73).

The interruption determination unit 32 acquires "repeated reproduction" which is the information on the reproduction mode of the content from the projection unit 33 (S74). The interruption determination unit 32, in the above-described process at S74, with reference to the interruption determination table 36-2 in the storage unit 34, based on the information that the projection start request from the tablet-type PC 11-2 is "prohibited when the previously executed projection function is normally reproduced", determines that the "interruption is permitted". Then, the interruption determination unit 32 sends notification the projection request management unit 31 of the determination result "interruption is permitted" (S75) .

The projection request management unit 31, based on the determination result "interruption is permitted" by the interruption determination unit 32, instructs the projection unit 33 to end the projection in order to abort the currently executing projection (S76). The projection unit 33, when the projection ends (S77), sends notification the projection request management unit 31 that the projection ends (S78).

The projection request management unit 31, based on the specification instruction of the content location acquired from the tablet-type PC 11-2, instructs the content server 13 to acquire the content (S79).

The projection request management unit 31, when acquiring the required content from the content server 13 (S80), instructs the projection unit 33 to start the projection (S81). The projection unit 33, in response to the request from the projection request management unit 31, starts projection of the projection request with "request ID is 2" (S82).

The projection request management unit 31, when the interruption of the projection request with "request ID is 2" from the tablet-type PC 11-2 is successful, sends notification the tablet-type PC 11-1 that the projection ends (S83).

As described above, in the case where the execution state of the content is "repeated reproduction", by permitting an interruption, an interruption at an appropriate time becomes possible, without waiting for an other operation to stop the projection by the previous projection function.

### (Third embodiment)

### <Other example of interruption determination table>

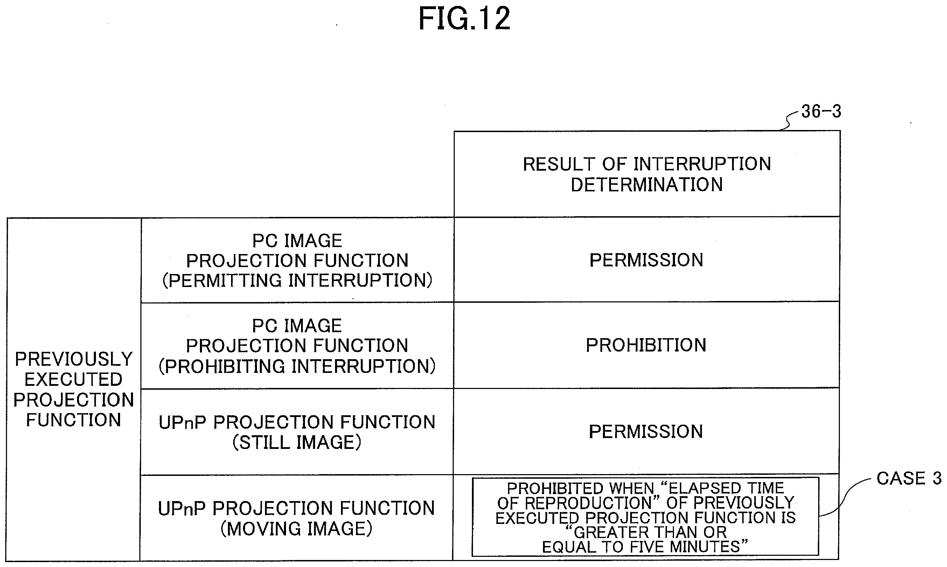

Fig. 12 is a diagram illustrating an other example of the interruption determination table 36. Compared with the above-described interruption determination table 36-1 shown in Fig. 6, an interruption determination table 36-3 shown in Fig. 12 is configured so that in the case where "previously executed projection function" is a "UPnP projection function" and a "moving image", a content executed afterward by the PC image projection function or the UPnP projection function is "prohibited when an elapsed time of reproduction of a previously executed projection function is greater than or equal to five minutes".

That is, the present embodiment is different from the first and second embodiments in that the interruption determination is processed according to an "elapsed time of reproduction" of the content for the execution state of the previously executed first content.

The "elapsed time of reproduction" for the execution state of the content in the present invention represents a length of time which has passed since the previously executed first content is reproduced. In the present embodiment, the setting value (determination criterion) is set to be five minutes, but the present invention is not limited to this.

In the following, an example of an interruption determination process will be explained, as Case 3, in which in the case where the previously executed content by the UPnP projection function is a "moving image" in the interruption determination table 36-3, a projection start request for other content by the PC image projection function or the UPnP projection function is received afterwards. In Case 3, the interruption determination process is performed according to the elapsed time of reproduction of the previously projected content.

### <Process sequence for prohibiting interruption depending on elapsed time of reproduction>

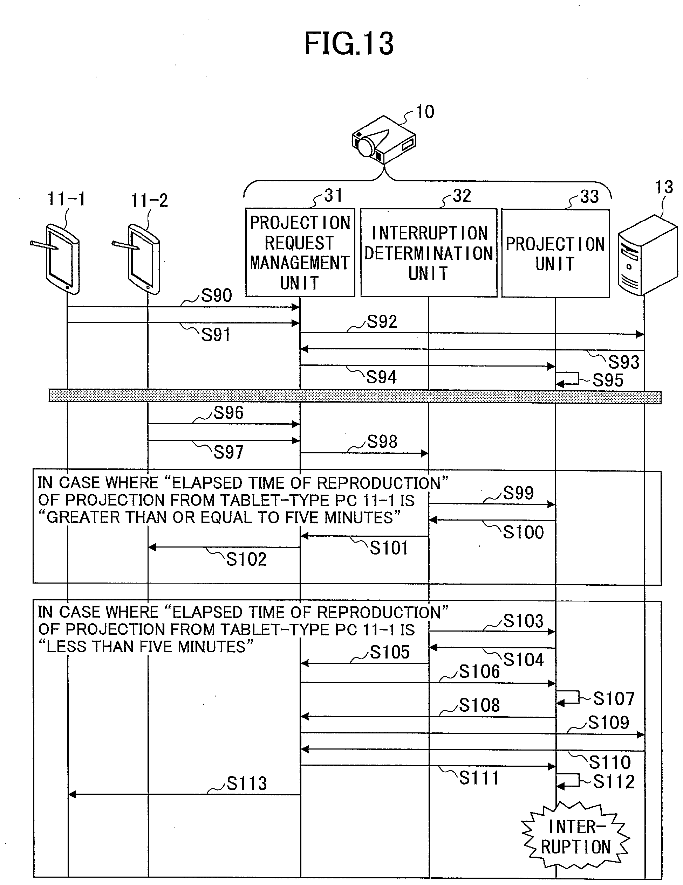

Fig. 13 is a sequence diagram illustrating an example of an interruption determination process based on the elapsed time of reproduction of content. Fig. 13 is a diagram explaining Case 3 shown in Fig. 12. At first, the interruption prohibition process sequence will be explained especially with reference to S99 to S102 in Fig. 13.

The processes from S90 to S98 in Fig. 13 are the same as the processes from S30 to S38 in Fig. 7, as described above, and a specific explanation will be omitted here. Meanwhile, in a process at S97, the projection request management unit 31 acquires a projection start request from the tablet-type PC 11-2.

The projection request management unit 31, since there is a currently executing projection request, sends notification the interruption determination unit 32 of content information (a UPnP projection function and a moving image) of the currently executing projection request, and request an interruption determination (S98). Then, the projection request management unit 31 sends notification of, for example, information with "request ID is 1" (a UPnP projection function and a moving image) as the content information of the currently executing projection request.

The interruption determination unit 32 requires the projection unit 33 to provide one of the information on the execution state of the content of the previously executed projection function, i.e. information on the elapsed time of reproduction (S99).

The interruption determination unit 32 acquires "elapsed time of reproduction is five minutes" which is the information on the elapsed time of reproduction of the content from the projection unit 33 (S100). Then, the interruption determination unit 32, in the above-described process of S70, with reference to the interruption determination table 36-3 in the storage unit 34, based on the information that the projection start request from the tablet-type PC 11-2 is "prohibited when the elapsed time of reproduction of the previously executed projection function is greater than or equal to five minutes", determines that the "interruption is prohibited". Then, the interruption determination unit 32 sends notification the projection request management unit 31 of the determination result "interruption is prohibited" (S101).

The projection request management unit 31, based on the determination result "interruption is prohibited", sends notification the tablet-type PC 11-2 that the projection start request ends due to a "projection error" (S102).

### <Interruption permission process sequence according to elapsed time of reproduction of content>

Fig. 13 illustrates, from S103 to S113, an example of the interruption permission process sequence based on the elapsed time of reproduction of the content. This sequence shows, for example, permitting an interruption of other content in Case 3, in which a projection start request of the other content is received afterward during the projection of a "moving image" by the "UPnP projection function" (See Fig. 12).

An explanation for the processes from S90 to S98 in Fig. 13, which have been described above, will be omitted.

Meanwhile, in the process at S97, the projection request management unit 31 acquires a projection start request from the tablet-type PC 11-2.

The projection request management unit 31, since there is a currently executing projection request, sends notification the interruption determination unit 32 of content information (a UPnP projection function and a moving image) of the currently executing projection request, and requests an interruption determination (S98). Then, the projection request management unit 31 sends notification of, for example, information with "request ID is 1" (a UPnP projection function and a moving image) as the content information of the currently executing projection request.

The interruption determination unit 32 requires the projection unit 33 to provide one of the information on the execution state of the content of the previously executed projection function, i.e. information on the elapses time of reproduction (S103).

The interruption determination unit 32 acquires "elapsed time of reproduction is four minutes" which is the information on the elapsed time of reproduction of the content from the projection unit 33 (S104). The interruption determination unit 32, in the above-described process at S104, with reference to the interruption determination table 36-3 in the storage unit 34, based on the information that the projection start request from the tablet-type PC 11-2 is "prohibited when the elapsed time of reproduction of the previously executed projection function is greater than or equal to five minutes", determines that the "interruption is permitted". Then, the interruption determination unit 32 sends notification the projection request management unit 31 of the determination result "interruption is permitted" (S105).

The projection request management unit 31, based on the determination result "interruption is permitted" by the interruption determination unit 32, requires the projection unit 33 to end the projection in order to abort the currently executing projection (S106). The projection unit 33, when the projection ends (S107), sends notification the projection request management unit 31 that the projection ends (S108).

The projection request management unit 31, based on the specification instruction of the content location acquired from the tablet-type PC 11-2, requires the content server 13 to acquire the content (S109).

The projection request management unit 31, when acquiring the required content from the content server 13 (S110), requires the projection unit 33 to start the projection (Sill). The projection unit 33 in response to the request from the projection request management unit 31, starts projection of the projection request with "request ID is 2" (S112).

The projection request management unit 31, when the interruption of the projection request with "request ID is 2" from the tablet-type PC 11-2 is successful, sends notification the tablet-type PC 11-1 that the projection ends (S113).

As described above, in the case where the "elapsed time of reproduction", as the execution state of the content, is greater than or equal to the setting value (five minutes), the reproduction operation can be prioritized to the last. In the case where for only a short time, i.e. shorter than the predetermined time (e.g. five minutes) the content is reproduced, by permitting an interruption actively, a convenient display device optimized to user's needs can be realized.

### (Fourth embodiment)

### <Other example of interruption determination table>

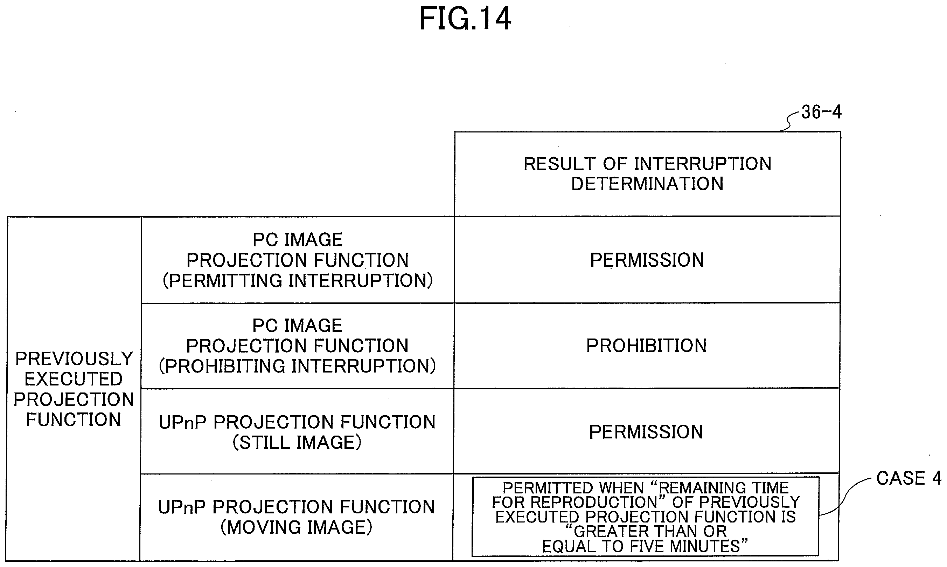

Fig. 14 is a diagram illustrating an other example of the interruption determination table 36. Compared with the above-described interruption determination table 36-1 shown in Fig. 6, an interruption determination table 36-4 shown in Fig. 14 is configured so that in the case where "previously executed projection function" is a "UPnP projection function" and a "moving image", a content executed afterward by the PC image projection function or the UPnP projection function is "prohibited when a remaining time for reproduction of previously executed projection function is greater than or equal to five minutes".

That is, the present embodiment is different from the first to third embodiments in that the interruption determination is processed according to a "remaining time for reproduction" of the content for the execution state of the previously executed first content.

The "remaining time for reproduction" for the execution state of the content in the present invention represents a length of time which remains for the reproduction of the previously executed first content. In the present embodiment, the setting value (determination criterion) is set to be five minutes, but the present invention is not limited to this.

In the following, an example of an interruption determination process will be explained, as Case 4, in which in the case where the previously executed content by the UPnP projection function is a "moving image" in the interruption determination table 36-4, a projection start request for other content by the PC image projection function or the UPnP projection function is received afterwards. In case 4, the interruption determination process is performed according to the remaining time for reproduction of the previously projected content.

The information related to the reproduction time of the content projected by the projection unit 33 is, for example, at S30 in Fig. 7, acquired by the projection request management unit 31 from the tablet-type PC 11 as one of the content information, and is registered in the "content information" of the projection request management table 35. Moreover, also in the projection unit 33 in the projector 10, information related to the reproduction time of the content is accumulated in real time.

### <Process sequence for prohibiting interruption depending on remaining time for reproduction>

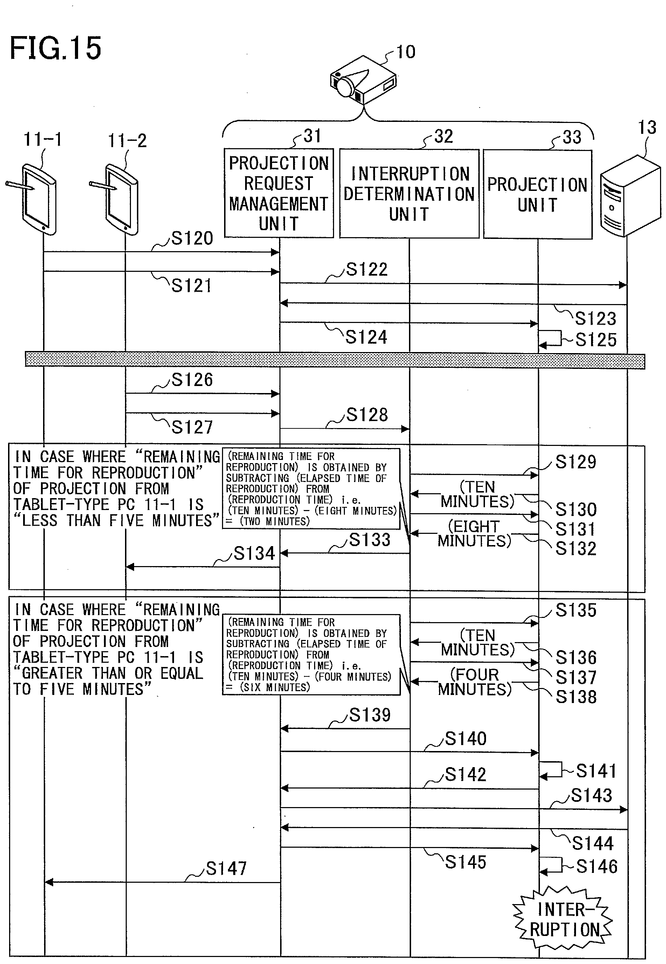

Fig. 15 is a sequence diagram illustrating an example of an interruption determination process based on the remaining time for reproduction of content. Fig. 15 is a diagram explaining the case 4 shown in Fig. 14. At first, the interruption prohibition process sequence will be explained especially with reference to S129 to S134 in Fig. 15.

The processes from S120 to S128 in Fig. 15 are the same as the processes from S30 to S38 in Fig. 7, as described above, and a specific explanation will be omitted here. Meanwhile, in a process at S127, the projection request management unit 31 acquires a projection start request from the tablet-type PC 11-2.

The projection request management unit 31, since there is a currently executing projection request, ends notification the interruption determination unit 32 of content information (a UPnP projection function and a moving image) of the currently executing projection request, and request an interruption determination (S128). Then, the projection request management unit 31 sends notification of, for example, information with "request ID is 1" (a UPnP projection function and a moving image) as the content information of the currently executing projection request.

The interruption determination unit 32 at first requires the projection unit 33 to provide the information related to the reproduction time included in the first content which is being projected, in order to acquire one of the information on the execution state of the content of the previously executed projection function, i.e. information on the remaining time for reproduction from the projection unit 33 (S129). The interruption determination unit 32 acquires "reproduction time is ten minutes" which is the information on the reproduction time of the content from the projection unit 33 (S100).

Next, the interruption determination unit 32 requires the projection unit 33 to provide the information related to the elapsed time of reproduction of the first content (S131). The interruption determination unit 32 acquires "elapsed time of reproduction is eight minutes" which is the information on the elapsed time of reproduction of the content from the projection unit 33 (S132), calculates a remaining time for reproduction, based on the acquired "reproduction time" and "elapsed time of reproduction", by subtracting the elapsed time of reproduction from the reproduction time, and determines that the "remaining time for reproduction is two minutes".

Moreover, the interruption determination unit 32, in the above-described process of S132, with reference to the interruption determination table 36-4 in the storage unit 34, based on the information that the projection start request from the tablet-type PC 11-2 is "permitted when the remaining time for reproduction of the previously executed projection function is greater than or equal to five minutes", determines that the "interruption is prohibited". Then, the interruption determination unit 32 sends notification the projection request management unit 31 of the determination result "interruption is prohibited" (S133).

The projection request management unit 31, based on the determination result "interruption is prohibited", sends notification the tablet-type PC 11-2 that the projection start request ends due to a "projection error" (S134).

### <Interruption permission process sequence according to remaining time for reproduction of content>

Fig. 15 illustrates, from S135 to S147, an example of the interruption permission process sequence based on the remaining time for reproduction of the content. This sequence shows, for example, permitting an interruption of an other content in Case 4, in which a projection start request of the other content is received afterward during the projection of a "moving image" by the "UPnP projection function" (See Fig. 14).

An explanation for the processes from S120 to S128 in Fig. 15, which has been described above, will be omitted.

Meanwhile, in the process at S127, the projection request management unit 31 acquires a projection start request from the tablet-type PC 11-2.

The projection request management unit 31, since there is a currently executing projection request, sends notification the interruption determination unit 32 of content information (a UPnP projection function and a moving image) of the currently executing projection request, and requests an interruption determination (S128). Then, the projection request management unit 31 sends notification of, for example, information with "request ID is 1" (a UPnP projection function and a moving image) as the content information of the currently executing projection request.

The interruption determination unit 32 at first requires the projection unit 33 to provide the information related to the reproduction time included in the first content which is being projected, in order to acquire one of the information on the execution state of the content of the previously executed projection function, i.e. information on the remaining time for reproduction from the projection unit 33 (S135). The interruption determination unit 32 acquires "reproduction time is ten minutes" which is the information on the reproduction time of the content from the projection unit 33 (S136).

Next, the interruption determination unit 32 requires the projection unit 33 to provide the information related to the elapsed time of reproduction of the first content (S137). The interruption determination unit 32 acquires "elapsed time of reproduction is four minutes" which is the information on the elapsed time of reproduction of the content from the projection unit 33 (S138), calculates a remaining time for reproduction, based on the acquired "reproduction time" and "elapsed time of reproduction", by subtracting the elapsed time of reproduction from the reproduction time, and determines that the "remaining time for reproduction is six minutes".

Moreover, the interruption determination unit 32, in the above-described process at S138, with reference to the interruption determination table 36-4 in the storage unit 34, based on the information that the projection start request from the tablet-type PC 11-2 is "permitted when the remaining time for reproduction of the previously executed projection function is greater than or equal to five minutes", determines that the "interruption is permitted". Then, the interruption determination unit 32 sends notification the projection request management unit 31 of the determination result "interruption is permitted" (S139).

The projection request management unit 31, based on the determination result "interruption is permitted" by the interruption determination unit 32, requires the projection unit 33 to end the projection in order to abort the currently executing projection (S140). The projection unit 33, when the projection ends (S141), sends notification the projection request management unit 31 that the projection ends (S142).

The projection request management unit 31, based on the specification instruction of the content location acquired from the tablet-type PC 11-2, requires the content server 13 to acquire the content (S143).

The projection request management unit 31, when acquiring the required content from the content server 13 (S144), requires the projection unit 33 to start the projection (S145). The projection unit 33 in response to the request from the projection request management unit 31, starts projection of the projection request with "request ID is 2" (S146).

The projection request management unit 31, when the interruption of the projection request with "request ID is 2" from the tablet-type PC 11-2 is successful, sends notification the tablet-type PC 11-1 that the projection ends (S147).

As described above, in the case where the "remaining time for reproduction", as the execution state of the content, is greater than or equal to the setting value (five minutes), by permitting an interruption actively, it is not necessary to wait for an unnecessary time period and a convenient display device optimized to user's needs can be realized.

### (Fifth embodiment)

### <Other example of interruption determination table>

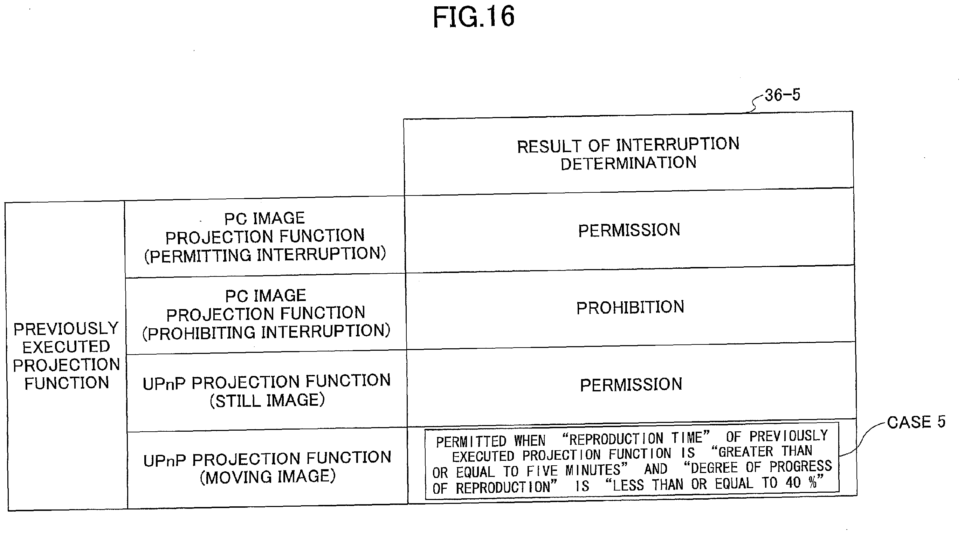

Fig. 16 is a diagram illustrating an other example of the interruption determination table 36. Compared with the above-described interruption determination table 36-1 shown in Fig. 6, an interruption determination table 36-5 shown in Fig. 16 is configured so that in the case where "previously executed projection function" is a "UPnP projection function" and a "moving image", a content executed afterwards by the PC image projection function or the UPnP projection function is "permitted when the reproduction time is greater than or equal to five minutes and a degree of progress of reproduction is less than or equal to 40 %".

That is, the present embodiment is different from the first to fourth embodiments in that the interruption determination is processed according to the reproduction time and the "degree of progress of reproduction" of the content for the execution state of the previously executed first content.

The "reproduction time" for the execution state of the content in the present invention represents a reproduction time included in the previously executed first content. In the present embodiment, the setting value (determination criterion) is set to be "greater than or equal to five minutes". The "degree of progress of reproduction" can be calculated by dividing the elapsed time of reproduction by the reproduction time. In the present embodiment, the setting value (determination criterion) is set to be "less than or equal to 40 %".

In the following, an example of an interruption determination process will be explained, as Case 5, in which in the case where the previously executed content by the UPnP projection function is a "moving image" in the interruption determination table 36-5, a projection start request for other content by the PC image projection function or the UPnP projection function is received afterward. In case 5, the interruption determination process is performed according to the reproduction time and the degree of progress of reproduction of the previously projected content. That is, the interruption determination process is performed according to two kinds of execution states, i.e. "reproduction time is greater than or equal to five minutes and degree of progress of reproduction is less than or equal to 40 %" for the previously executed first content.

Incidentally, the information related to the reproduction time of the content projected by the projection unit 33 is, for example, at S30 in Fig. 7, acquired by the projection request management unit 31 from the tablet-type PC 11 as one of the content information, and is registered in the "content information" of the projection request management table 35. Moreover, also in the projection unit 33 in the projector 10, information related to the reproduction time of the content is accumulated in real time.

### <Process sequence for prohibiting interruption depending on reproduction time and degree of progress of reproduction of content>

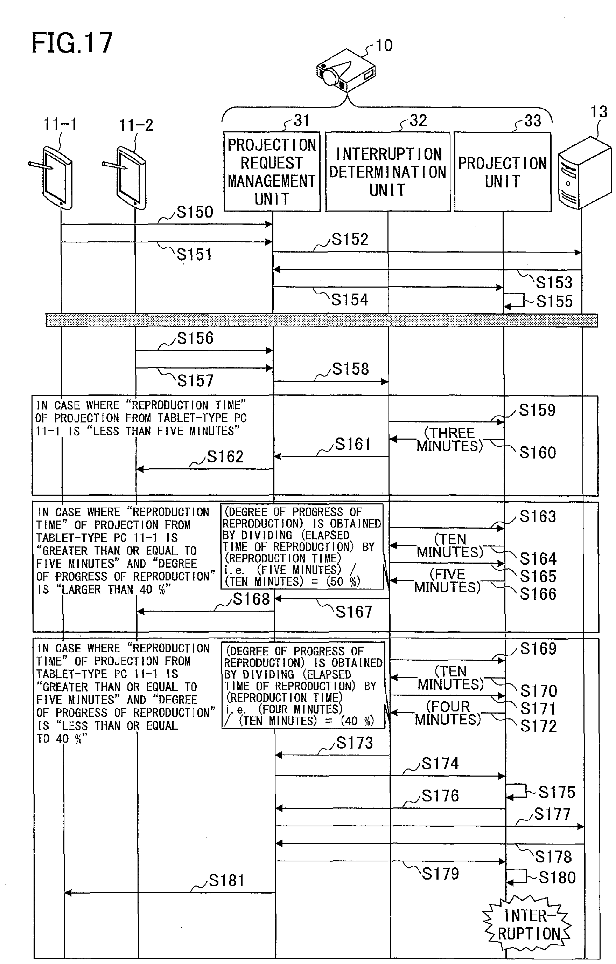

Fig. 17 is a sequence diagram illustrating an example of an interruption determination process based on the reproduction time and the degree of progress of reproduction of content. Fig. 17 is a diagram explaining the case 5 shown in Fig. 16. At first, a first interruption prohibition process sequence will be explained especially with reference to S159 to S168 in Fig. 17.

### (First process sequence for prohibiting interruption)

The first interruption prohibition process sequence is a sequence in the case where as the execution state of the previously executed first content, the reproduction time is shorter than a setting time.

The processes from S150 to S158 in Fig. 17 are the same as the processes from S30 to S38 in Fig. 7, as described above, and a specific explanation will be omitted here. Meanwhile, in a process at S157, the projection request management unit 31 acquires a projection start request from the tablet-type PC 11-2.

The projection request management unit 31, since there is a currently executing projection request, sends notification the interruption determination unit 32 of content information (a UPnP projection function and a moving image) of the currently executing projection request, and requests an interruption determination (S158). Then, the projection request management unit 31 sends notification of, for example, information with "request ID is 1" (a UPnP projection function and a moving image) as the content information of the currently executing projection request.

The interruption determination unit 32 requires the projection unit 33 to provide one of the information on the execution state of the content of the previously executed projection function, i.e. information related to the reproduction time (S159). The interruption determination unit 32 acquires from the projection unit 33 "reproduction time is three minutes" as the information related to the reproduction time included in the content (S160). The interruption determination unit 32, in the above-described process of S160, with reference to the interruption determination table 36-5 in the storage unit 34, based on the information that the projection start request from the tablet-type PC 11-2 is "permitted when the reproduction time of the previously executed projection function is greater than or equal to five minutes", determines that the "interruption is prohibited". Then, the interruption determination unit 32 sends notification the projection request management unit 31 of the determination result "interruption is prohibited" (S161).

The projection request management unit 31, based on the determination result "interruption is prohibited", sends notification the tablet-type PC 11-2 that the projection start request ends due to a "projection error" (S162).

### (Second process sequence for prohibiting interruption)

Next, the second interruption prohibiting process sequence will be explained. The second interruption prohibiting process sequence is a sequence in the case where as the execution state of the previously executed first content, the reproduction time is greater than or equal to the setting time, but the degree of progress of reproduction is greater than a setting value.

The processes from S150 to S158 in Fig. 17 are the same as the processes from S30 to S38 in Fig. 7, as described above, and a specific explanation will be omitted here. Meanwhile, in a process at S157, the projection request management unit 31 acquires a projection start request from the tablet-type PC 11-2.

The projection request management unit 31, since there is a currently executing projection request, sends notification the interruption determination unit 32 of content information (a UPnP projection function and a moving image) of the currently executing projection request, and requests an interruption determination (S158). Then, the projection request management unit 31 sends notification of, for example, information with "request ID is 1" (a UPnP projection function and a moving image) as the content information of the currently executing projection request.

The interruption determination unit 32 requires the projection unit 33 to provide one of the information on the execution state of the content of the previously executed projection function, i.e. information related to the reproduction time (S163). The interruption determination unit 32 acquires from the projection unit 33 "reproduction time is ten minutes" as the information related to the reproduction time included in the content (S164). The interruption determination unit 32, in the above-described process of S164, with reference to the interruption determination table 36-5 in the storage unit 34, based on the information that the projection start request from the tablet-type PC 11-2 is "permitted when the reproduction time of the previously executed projection function is greater than or equal to five minutes", determines that the "interruption is permitted".

The interruption determination unit 32, further in order to calculate information related to the degree of progress of reproduction of the previously executed content, requires the projection unit 33 to provide one of the information on the execution state of the content, i.e. information on the elapsed time of reproduction (S165). The interruption determination unit 32 acquires "elapsed time of reproduction is five minutes" which is the information on the elapsed time of reproduction of the content from the projection unit 33 (S166), calculates a degree of progress of reproduction based on the acquired "reproduction time" and "elapsed time of reproduction", by dividing the elapsed time or reproduction by the reproduction time, and determines that the "degree of progress of reproduction is 50 %".

Moreover, the interruption determination unit 32, in the above-described process of S166, with reference to the interruption determination table 36-5 in the storage unit 34, based on the information that the projection start request from the tablet-type PC 11-2 is "permitted when the reproduction time of the previously executed projection function is greater than or equal to five minutes and the degree of progress of reproduction is less than or equal to 40 %", determines that the "interruption is prohibited". Then, the interruption determination unit 32 sends notification the projection request management unit 31 of the determination result "interruption is prohibited" (S167).

The projection request management unit 31, based on the determination result "interruption is prohibited", sends notification the tablet-type PC 11-2 that the projection start request ends due to a "projection error" (S168).

### <Process sequence for permitting interruption depending on reproduction time and degree of progress of reproduction of content>

Fig. 17 illustrates, from S150 to S158, an example of the interruption permission process sequence based on the reproduction time and the degree of progress of reproduction of the content. This sequence shows, for example, permitting an interruption of other content in Case 5, in which a projection start request of the other content is received afterwards during the projection of a "moving image" by the "UPnP projection function" (See Fig. 16).

The processes from S150 to S158 in Fig. 17 are the same as the processes from S30 to S38 in Fig. 7, as described above, and a specific explanation will be omitted here. Meanwhile, in a process at S157, the projection request management unit 31 acquires a projection start request from the tablet-type PC 11-2.

The projection request management unit 31, since there is a currently executing projection request, sends notification the interruption determination unit 32 of content information (a UPnP projection function and a moving image) of the currently executing projection request, and requests an interruption determination (S158). Then, the projection request management unit 31 sends notification of, for example, information with "request ID is 1" (a UPnP projection function and a moving image) as the content information of the currently executing projection request.

The interruption determination unit 32 requires the projection unit 33 to provide one of the information on the execution state of the content of the previously executed projection function, i.e. information related to the reproduction time (S169). The interruption determination unit 32 acquires from the projection unit 33 "reproduction time is ten minutes" as the information related to the reproduction time included in the content (S170). The interruption determination unit 32, in the above-described process of S170, with reference to the interruption determination table 36-5 in the storage unit 34, based on the information that the projection start request from the tablet-type PC 11-2 is "permitted when the reproduction time of the previously executed projection function is greater than or equal to five minutes", determines that the "interruption is permitted".

The interruption determination unit 32, further in order to calculate information related to the degree of progress of reproduction of the previously executed content, requires the projection unit 33 to provide one of the information on the execution state of the content, i.e. information on the elapsed time of reproduction (S171). The interruption determination unit 32 acquires "elapsed time of reproduction is four minutes" which is the information on the elapsed time of reproduction of the content from the projection unit 33 (S172), calculates a degree of progress of reproduction based on the acquired "reproduction time" and "elapsed time of reproduction", by dividing the elapsed time or reproduction by the reproduction time, and determines that the "degree of progress of reproduction is 40 %".

Moreover, the interruption determination unit 32, in the above-described process of S172, with reference to the interruption determination table 36-5 in the storage unit 34, based on the information that the projection start request from the tablet-type PC 11-2 is "permitted when the reproduction time of the previously executed projection function is greater than or equal to five minutes and the degree of progress of reproduction is less than or equal to 40 %", determines that the "interruption is permitted". Then, the interruption determination unit 32 sends notification the projection request management unit 31 of the determination result "interruption is permitted" (S173).

The projection request management unit 31, based on the determination result "interruption is permitted" by the interruption determination unit 32, requires the projection unit 33 to end the projection in order to abort the currently executing projection (S174). The projection unit 33, when the projection ends (S175), sends notification the projection request management unit 31 that the projection ends (S176).

The projection request management unit 31, based on the specification instruction of the content location acquired from the tablet-type PC 11-2, requires the content server 13 to acquire the content (S177).

The projection request management unit 31, when acquiring the required content from the content server 13 (S178), requires the projection unit 33 to start the projection (S179). The projection unit 33 in response to the request from the projection request management unit 31, starts projection of the projection request with "request ID is 2" (S180).

The projection request management unit 31, when the interruption of the projection request with "request ID is 2" from the tablet-type PC 11-2 is successful, sends notification the tablet-type PC 11-1 that the projection ends (S181).

As described above, in the case where the "reproduction time" is greater than or equal to the setting value (greater than or equal to five minutes) and the "degree of progress of reproduction" is less than or equal to the setting value (less than or equal to 40 %), that is when the reproduction time is long and only the beginning part has been reproduced, the interruption is permitted. Accordingly, it is not necessary to wait for unnecessary time period i.e. for a long remained reproduction time, and a convenient display device can be realized.

According to the above-described embodiments, an appropriate interruption control can be realized for a display request for displaying content by projecting onto a screen, and a display request for displaying content on a display unit of an information device such as a PC or a tablet-type PC. Accordingly, convenience for the user can be improved. Meanwhile, the system configuration to which the display device and the content server are connected is an example, and various systems may be configured according to a purpose or an object.

Further, the present invention is not limited to these embodiments, but various variations and modifications may be made without departing from the scope of the present invention as claimed.

## Claims

1. A display device (10), arranged to receive motion image data from different sources on a network to which it is connectable, the device comprising:
a display unit (33) configured to reproduce motion image data from a source among the different sources, and to provide mode information relating to an execution state of said motion image data;
a storage unit (34) that stores a criterion for aborting a reproduction of motion image data reproduced by the display unit according to the mode information of a respective motion image data being provided for reproduction; and
a determination unit (32) that, in response to a display start request to display other motion image data from another source among the different sources connected to the display via the network, is configured to determine whether to abort the reproduction of the motion image data or not based on the criterion for aborting a reproduction of motion image data stored in the storage unit (34)
the display device being configured to cause the display unit (33) to display the other motion image data, after the reproduction of the motion image data being provided for reproduction has been aborted.

2. The display device as claimed in claim 1 wherein when the mode information is indicative that the motion image data are being reproduced, the determination unit is configured to determine not to abort the reproduction of the motion image data, and when the mode information is indicative that the reproduction of the motion image data is halted, the determination unit is configured to determine to abort the reproduction of the motion image data.

3. The display device as claimed in claim 1, wherein the determination unit is configured not to abort the reproduction of the motion image data when the information indicates that the reproduction mode is not a "repeat reproduction" mode, and to abort the reproduction of the motion image data, when the mode information indicates that the reproduction mode is a "repeat reproduction" mode.

4. The display device as claimed in claim 1, wherein when the mode information is indicative that an elapsed time of reproduction of the motion image data is greater than or equal to a setting value, the determination unit is configured to determine not to abort the reproduction of the motion image data, and when the mode information is indicative that the elapsed time of reproduction of the motion image data is less than the setting value, the determination unit is configured to determine to abort the reproduction of the motion image data.

5. The display device as claimed in claim 1, wherein when the mode information is indicative that a remaining time of reproduction of the motion image data, which is obtained from a reproduction time and an elapsed time of reproduction of the motion image data, is less than a setting value, the determination unit is configured to determine not to abort the reproduction of the motion image data, and when the mode information is indicative that the remaining time of reproduction of the motion image data is greater than or equal to the setting value, the determination unit is configured to determine to abort the reproduction of the motion image data.

6. The display device as claimed in claim 1, wherein the determination unit is configured not to abort the reproduction of the motion image data when the mode information is indicative that a reproduction time of the motion image data is less than a first setting value or when the mode information is indicative that the reproduction time of the motion image data is greater than or equal to the first setting value and a degree of progress of reproduction of the motion image data, which is obtained from the reproduction time and an elapsed time of reproduction of the motion image data, is greater than a second setting value, and wherein the determination unit is configured to abort the reproduction of the motion image data, when the mode information indicates that the reproduction time of the motion image data is greater than or equal to the first setting value and the degree of progress of reproduction of the motion image data is less than or equal to the second setting value.

7. A display system comprising:
a display device (10) as claimed in any one of claims 1 to 6; and
a content server (13) that is connected to the display device via a network (N).

8. A non-transitory computer-readable storage medium storing a program for causing a computer of a display device on a network (N) to perform a process of reproducing motion image data received from different sources on the network, the process comprising:
a display step of reproducing motion image data from a source among the different sources, and providing mode information relating to an execution state of said motion image data;
a storage step of storing in a storage unit (34) a criterion for aborting a reproduction of motion image data reproduced by the display unit according to the mode information of a respective motion image data being provided for reproduction ;
a determination step, in response to a display start request to display other motion image data from another source among the different sources connected to the display via the network, for other motion image data, to determine whether to abort the reproduction of the motion image data based on the criterion for aborting a reproduction of motion image data stored in the storage unit (34);
and a further display step of displaying the other motion image data after the reproduction of the said motion image data being provided for reproduction has been aborted.

## Patentansprüche

1. Anzeigevorrichtung (10), die angeordnet ist, Bewegungsbilddaten von verschiedenen Quellen in einem Netzwerk, mit dem sie verbindbar ist, zu empfangen, wobei die Vorrichtung Folgendes umfasst:
eine Anzeigeeinheit (33), die dazu ausgelegt ist, Bewegungsbilddaten von einer Quelle unter den verschiedenen Quellen zu reproduzieren und Modusinformationen, die einen Ausführungsstatus der Bewegungsbilddaten betreffen, bereitzustellen;
eine Speichereinheit (34), die ein Kriterium für ein Abbrechen einer Reproduktion von Bewegungsbilddaten, die von der Anzeigeeinheit gemäß den Modusinformationen jeweiliger Bewegungsbilddaten, die für eine Reproduktion bereitgestellt werden, speichert; und
eine Bestimmungseinheit (32), die als Reaktion auf eine Anzeigestartanforderung zum Anzeigen anderer Bewegungsbilddaten von einer anderen Quelle unter den verschiedenen Quellen, die via das Netzwerk mit der Anzeige verbunden sind, dazu ausgelegt ist, auf Basis des Kriteriums zum Abbrechen einer Reproduktion von Bewegungsbilddaten, die in der Speichereinheit (34) gespeichert sind, zu bestimmen, ob die Reproduktion der Bewegungsbilddaten abgebrochen werden soll oder nicht;
wobei die Anzeigevorrichtung dazu ausgelegt ist, die Anzeigeeinheit (33) zu veranlassen, die anderen Bewegungsbilddaten anzuzeigen, nachdem die Reproduktion der Bewegungsbilddaten, die für die Reproduktion bereitgestellt sind, abgebrochen wurde.

2. Anzeigevorrichtung nach Anspruch 1, wobei, wenn die Modusinformationen anzeigen, dass die Bewegungsbilddaten reproduziert werden, die Bestimmungseinheit dazu ausgelegt ist zu bestimmen, die Reproduktion der Bewegungsbilddaten nicht abzubrechen, und wenn die Modusinformationen anzeigen, dass die Reproduktion der Bewegungsbilddaten angehalten ist, die Bestimmungseinheit dazu ausgelegt ist zu bestimmen, die Reproduktion der Bewegungsbilddaten abzubrechen.

3. Anzeigevorrichtung nach Anspruch 1, wobei die Bestimmungseinheit dazu ausgelegt ist, die Reproduktion der Bewegungsbilddaten nicht abzubrechen, wenn die Informationen anzeigen, dass der Reproduktionsmodus nicht ein Modus des Typs "Reproduktion wiederholen" ist, und die Reproduktion der Bewegungsbilddaten abzubrechen, wenn die Modusinformationen anzeigen, dass der Reproduktionsmodus ein Modus des Typs "Reproduktion wiederholen" ist.

4. Anzeigevorrichtung nach Anspruch 1, wobei, wenn die Modusinformationen anzeigen, dass eine vergangene Zeit einer Reproduktion der Bewegungsbilddaten größer als ein oder gleich einem Einstellwert ist, die Bestimmungseinheit dazu ausgelegt ist zu bestimmen, die Reproduktion der Bewegungsbilddaten nicht abzubrechen, und wenn die Modusinformationen anzeigen, dass die vergangene Zeit einer Reproduktion der Bewegungsbilddaten kleiner ist als der Einstellwert, die Bestimmungseinheit dazu ausgelegt ist zu bestimmen, die Reproduktion der Bewegungsbilddaten abzubrechen.

5. Anzeigevorrichtung nach Anspruch 1, wobei, wenn die Modusinformationen anzeigen, dass eine verbleibende Zeit einer Reproduktion der Bewegungsbilddaten die aus einer Reproduktionszeit und einer vergangenen Zeit einer Reproduktion der Bewegungsbilddaten erhalten wird, kleiner als ein Einstellwert ist, die Bestimmungseinheit dazu ausgelegt ist zu bestimmen, die Reproduktion der Bewegungsbilddaten nicht abzubrechen, und wenn die Modusinformationen anzeigen, dass die verbleibende Zeit einer Reproduktion der Bewegungsbilddaten größer als der oder gleich dem Einstellwert ist, die Bestimmungseinheit dazu ausgelegt ist zu bestimmen, die Reproduktion der Bewegungsbilddaten abzubrechen.

6. Anzeigevorrichtung nach Anspruch 1, wobei die Bestimmungseinheit dazu ausgelegt ist, die Reproduktion der Bewegungsbilddaten nicht abzubrechen, wenn die Modusinformationen anzeigen, dass eine Reproduktionszeit der Bewegungsbilddaten kleiner ist als ein erster Einstellwert oder wenn die Modusinformationen anzeigen, dass die Reproduktionszeit der Bewegungsbilddaten größer als der oder gleich dem ersten Einstellwert und ein Grad des Fortschritts der Reproduktion der Bewegungsbilddaten, der aus der Reproduktionszeit und einer vergangenen Zeit einer Reproduktion der Bewegungsbilddaten erhalten wird, größer als ein zweiter Einstellwert ist, und wobei die Bestimmungseinheit dazu ausgelegt ist, die Reproduktion der Bewegungsbilddaten abzubrechen, wenn die Modusinformationen anzeigen, dass die Reproduktionszeit der Bewegungsbilddaten größer als der oder gleich dem ersten Einstellwert und der Grad des Fortschritts einer Reproduktion der Bewegungsbilddaten kleiner als der oder gleich dem zweiten Einstellwert ist.

7. Anzeigesystem, das Folgendes umfasst:
eine Anzeigevorrichtung (10) nach einem der Ansprüche 1 bis 6 und
einen Inhaltsserver (13), der via ein Netzwerk (N) mit der Anzeigevorrichtung verbunden ist.

8. Nichttransitorisches computerlesbares Speichermedium, auf dem ein Programm gespeichert ist, das bewirkt, dass ein Computer einer Anzeigevorrichtung in einem Netzwerk (N) ein Verfahren des Reproduzierens von Bewegungsbilddaten, die von verschiedenen Quellen im Netzwerk empfangen werden, durchführt, wobei das Verfahren Folgendes umfasst:
einen Anzeigeschritt zum Reproduzieren von Bewegungsbilddaten von einer Quelle unter den verschiedenen Quellen und Bereitstellen von Modusinformationen, die einen Ausführungsstatus der Bewegungsbilddaten betreffen;
einen Speicherschritt zum Speichern eines Kriteriums für ein Abbrechen einer Reproduktion von Bewegungsbilddaten, die von der Anzeigeeinheit gemäß den Modusinformationen jeweiliger Bewegungsbilddaten reproduziert werden, die für eine Reproduktion bereitgestellt werden, in einer Speichereinheit (34);
einen Bestimmungsschritt als Reaktion auf eine Anzeigestartanforderung zum Anzeigen anderer Bewegungsbilddaten von einer anderen Quelle unter den verschiedenen Quellen, die via das Netzwerk mit der Anzeige verbunden sind, für andere Bewegungsbilddaten, um auf Basis des Kriteriums zum Abbrechen einer Reproduktion von Bewegungsbilddaten, die in der Speichereinheit (34) gespeichert sind, zu bestimmen, ob die Reproduktion der Bewegungsbilddaten abgebrochen werden soll oder nicht;
und einen weiteren Anzeigeschritt zum Anzeigen der anderen Bewegungsbilddaten, nachdem die Reproduktion der Bewegungsbilddaten, die für die Reproduktion bereitgestellt werden, abgebrochen wurde.

## Revendications

1. Dispositif d'affichage (10), agencé de manière à recevoir des données d'image animée en provenance de différentes sources sur un réseau auquel il peut être connecté, le dispositif comprenant :
une unité d'affichage (33) configurée de manière à reproduire des données d'image animée en provenance d'une source parmi les différentes sources, et à fournir des informations de mode connexes à un état d'exécution desdites données d'image animée ;
une unité de stockage (34) qui stocke un critère pour interrompre une reproduction de données d'image animée reproduites par l'unité d'affichage selon les informations de mode d'une donnée d'image animée respective fournie à des fins de reproduction ; et
une unité de détermination (32) qui, en réponse à une demande de démarrage d'affichage visant à afficher d'autres données d'image animée en provenance d'une autre source parmi les différentes sources connectées à l'écran d'affichage par l'intermédiaire du réseau, est configurée de manière à déterminer s'il convient ou non d'interrompre la reproduction des données d'image animée sur la base du critère pour interrompre une reproduction de données d'image animée lequel est stocké dans l'unité de stockage (34) ;
dans lequel le dispositif d'affichage est configuré de manière à amener l'unité d'affichage (33) à afficher les autres données d'image animée, suite à l'interruption de la reproduction des données d'image animée fournies à des fins de reproduction.

2. Dispositif d'affichage selon la revendication 1, dans lequel, lorsque les informations de mode indiquent que les données d'image animée sont en cours de reproduction, l'unité de détermination est configurée de manière à déterminer qu'il convient de ne pas interrompre la reproduction des données d'image animée, et lorsque les informations de mode indiquent que la reproduction des données d'image animée est arrêtée, l'unité de détermination est configurée de manière à déterminer qu'il convient d'interrompre la reproduction des données d'image animée.

3. Dispositif d'affichage selon la revendication 1, dans lequel l'unité de détermination est configurée de manière à ne pas interrompre la reproduction des données d'image animée lorsque les informations indiquent que le mode de reproduction n'est pas un mode de « répétition de reproduction », et à interrompre la reproduction des données d'image animée lorsque les informations de mode indiquent que le mode de reproduction est un mode de « répétition de reproduction ».

4. Dispositif d'affichage selon la revendication 1, dans lequel, lorsque les informations de mode indiquent qu'un temps écoulé de reproduction des données d'image animée est supérieur ou égal à une valeur de définition, l'unité de détermination est configurée de manière à déterminer qu'il convient de ne pas interrompre la reproduction des données d'image animée, et lorsque les informations de mode indiquent que le temps écoulé de reproduction des données d'image animée est inférieur à la valeur de définition, l'unité de détermination est configurée de manière à déterminer qu'il convient d'interrompre la reproduction des données d'image animée.

5. Dispositif d'affichage selon la revendication 1, dans lequel, lorsque les informations de mode indiquent qu'un temps restant de reproduction des données d'image animée, qui est obtenu à partir d'un temps de reproduction et d'un temps écoulé de reproduction des données d'image animée, est inférieur à une valeur de définition, l'unité de détermination est configurée de manière à déterminer qu'il convient de ne pas interrompre la reproduction des données d'image animée, et lorsque les informations de mode indiquent que le temps restant de reproduction des données d'image animée est supérieur ou égal à la valeur de définition, l'unité de détermination est configurée de manière à déterminer qu'il convient d'interrompre la reproduction des données d'image animée.

6. Dispositif d'affichage selon la revendication 1, dans lequel l'unité de détermination est configurée de manière à ne pas interrompre la reproduction des données d'image animée lorsque les informations de mode indiquent qu'un temps de reproduction des données d'image animée est inférieur à une première valeur de définition, ou lorsque les informations de mode indiquent que le temps de reproduction des données d'image animée est supérieur ou égal à la première valeur de définition et qu'un degré de progression de reproduction des données d'image animée, qui est obtenu à partir du temps de reproduction et d'un temps écoulé de reproduction des données d'image animée, est supérieur à une seconde valeur de définition ; et
dans lequel l'unité de détermination est configurée de manière à interrompre la reproduction des données d'image animée, lorsque les informations de mode indiquent que le temps de reproduction des données d'image animée est supérieur ou égal à la première valeur de définition et que le degré de progression de reproduction des données d'image animée est inférieur ou égal à la seconde valeur de définition.

7. Système d'affichage comprenant :
un dispositif d'affichage (10) selon l'une quelconque des revendications 1 à 6 ; et
un serveur de contenu (13) qui est connecté au dispositif d'affichage par l'intermédiaire d'un réseau (N).

8. Support de stockage lisible par ordinateur non transitoire stockant un programme pour amener un ordinateur d'un dispositif d'affichage sur un réseau (N) à mettre en oeuvre un processus de reproduction de données d'image animée reçues en provenance de différentes sources sur le réseau, le processus comprenant :
une étape d'affichage consistant à reproduire des données d'image animée en provenance d'une source parmi les différentes sources, et à fournir des informations de mode connexes à un état d'exécution desdites données d'image animée ;
une étape de stockage consistant à stocker, dans une unité de stockage (34), un critère pour interrompre une reproduction de données d'image animée reproduites par l'unité d'affichage selon les informations de mode d'une donnée d'image animée respective fournie à des fins de reproduction ;
une étape de détermination, en réponse à une demande de démarrage d'affichage visant à afficher d'autres données d'image animée en provenance d'une autre source parmi les différentes sources connectées à l'écran d'affichage par l'intermédiaire du réseau, pour d'autres données d'image animée, consistant à déterminer s'il convient ou non d'interrompre la reproduction des données d'image animée sur la base du critère pour interrompre une reproduction de données d'image animée lequel est stocké dans l'unité de stockage (34) ;
et une étape d'affichage supplémentaire consistant à afficher les autres données d'image animée, suite à l'interruption de la reproduction desdites données d'image animée fournies à des fins de reproduction.
